# EUROPÄISCHE PATENTSCHRIFT

(11) **EP 4 547 610 B1**
(45) Veröffentlichungstag und Bekanntmachung des Hinweises auf die Patenterteilung: **19.11.2025**
(21) Anmeldenummer: 24768123.2
(22) Anmeldetag: 11.09.2024
(51) Int. Cl.: C01C 1/04, C25B 1/04

(54) **AMMONIAKSYNTHESEANLAGE FÜR WECHSELNDEN TEILLASTBETRIEB UND VERFAHREN ZUM BETREIBEN EINER AMMONIAKSYNTHESEANLAGE**
AMMONIA SYNTHESIS PLANT FOR PARTIAL-LOAD OPERATION WHICH CHANGES, AND METHOD FOR OPERATING AN AMMONIA SYNTHESIS PLANT
INSTALLATION DE SYNTHÈSE D'AMMONIAC POUR OPÉRATION DE CHARGE PARTIELLE QUI CHANGE, ET PROCÉDÉ DE FONCTIONNEMENT D'UNE INSTALLATION DE SYNTHÈSE D'AMMONIAC

(30) Priorität: 15.09.2023 DE 102023209012; 15.09.2023 LU 103196
(43) Veröffentlichungstag der Anmeldung: 07.05.2025
(73) Patentinhaber: thyssenkrupp Uhde GmbH, 44141 Dortmund (DE); thyssenkrupp AG, 45143 Essen (DE)
(72) Erfinder: GORVAL, Evgeni, 44135 Dortmund (DE); KEIL, Bernd, 44141 Dortmund (DE)
(74) Vertreter: thyssenkrupp Intellectual Property GmbH
(86) Internationale Anmeldenummer: PCT/EP2024/075336
(87) Internationale Veröffentlichungsnummer: WO 2025/056589

(56) Entgegenhaltungen:
- EP-A1- 4 148 020
- BE-A1- 1 029 986
- US-A1- 2022 388 854

## Beschreibung

Die Erfindung liegt auf dem Gebiet des chemischen Anlagenbaus und betrifft eine Ammoniaksyntheseanlage mit einer Wasserstoffvorrichtung, welche eingerichtet ist, Wasserstoff bereitzustellen, und einem Synthesekreislauf, wobei der Synthesekreislaufeine Fördervorrichtung, die eingerichtet ist zum zyklischen Fördern eines Gasgemisches enthaltend Stickstoff, Wasserstoff und Ammoniak in eine Synthesekreislaufförderrichtung, wobei die Fördervorrichtung eine Saugseite und eine Druckseite aufweist, einen Konverter, der eingerichtet ist zum katalytischen Umsetzen von Stickstoff und Wasserstoff zumindest teilweise zu Ammoniak, wobei der Konverter einen Einlass und einen Auslass aufweist, wobei der Einlass des Konverters mit der Druckseite der Fördervorrichtung strömungstechnisch verbunden ist und der Auslass des Konverters mit der Saugseite der Fördervorrichtung strömungstechnisch verbunden ist, und eine erste Umgehungsleitung aufweist, welche von der Saugseite der Fördervorrichtung zu der Druckseite der Fördervorrichtung strömungstechnisch gegenläufig parallel zur Fördervorrichtung angeordnet ist und welche zum absperrbaren Rückführen eines ersten Teilstroms des Gasgemischs von der Druckseite der Fördervorrichtung zu der Saugseite der Fördervorrichtung eingerichtet ist, wobei die erste Umgehungsleitung eine Abkühlvorrichtung aufweist, die zum Kühlen des ersten Teilstroms des Gasgemischs eingerichtet ist.

Die Erfindung betrifft ferner ein Verfahren zum Betreiben einer Ammoniaksyntheseanlage, insbesondere einer Ammoniaksyntheseanlage der zuvor genannten Art, wobei ein Gasgemisch aufweisend Stickstoff, Wasserstoff und Ammoniak in einem Synthesekreislauf durch eine Fördervorrichtung mit einer Saugseite und einer Druckseite zyklisch gefördert wird, wobei Stickstoff und Wasserstoff dem Synthesekreislauf zugeführt werden und dort in einem Konverter zumindest teilweise zu Ammoniak umgesetzt werden, und wobei das Gasgemisch in Synthesekreislaufförderrichtung stromabwärts von der Fördervorrichtung in einen ersten Teilstrom und einen ersten Reststrom aufgeteilt wird, von denen der erste Reststrom in den Konverter geführt wird und von denen der erste Teilstrom unter Umgehen des Konverters von der Druckseite der Fördervorrichtung zu der Saugseite der Fördervorrichtung rückgeführt und dabei in einer Abkühlvorrichtung zumindest teilweise abgekühlt wird.

Ammoniak ist eine der wichtigsten Industriechemikalien mit einer weltweiten Jahresproduktion von mehr als 150 Millionen Tonnen, wovon der größte Teil in der Düngemittelindustrie verwendet wird. Seit mehr als einem Jahrhundert wird Ammoniak großtechnisch vor allem nach dem Haber-Bosch-Verfahren hergestellt, in welchem Wasserstoff und Stickstoff in einem Festbettreaktor an einem Katalysator miteinander umgesetzt werden. Bei der Ammoniakherstellung aus Stickstoff besteht eine Schwierigkeit darin, die stabile Stickstoff-Stickstoff-Dreifachbindung im Stickstoffmolekül zu spalten und den Stickstoff so zu aktivieren. Im Haber-Bosch-Verfahren wird dies durch den Einsatz von spezifisch aktiven Katalysatoren mit Eisen als katalytisch aktiver Hauptkomponente bei hohen Temperaturen zur Aktivierung erreicht, gleichzeitig wird die Lage des Gleichgewichts bei der Ammoniak-Bildungsreaktion durch den Einsatz hoher Drücke zum Ammoniak hin verschoben. Typischerweise sollte dabei eine Reaktortemperatur von 350 °C nicht unterschritten werden, um eine hinreichende Reaktionsgeschwindigkeit bei der Ammoniaksynthese zu gewährleisten. Die Ammoniak-Bildungsreaktion verläuft insgesamt exotherm, weshalb im laufenden Betrieb hinreichend Wärmeenergie zur Verfügung steht, sodass die erforderliche Mindesttemperatur nicht unterschritten wird; vielmehr müssen typischerweise relativ große Wärmemengen abgeführt werden, um einen stabilen Betrieb zu gewährleisten und lokale Überhitzungen im Ammoniaksynthesereaktor zu vermeiden, welche die Aktivität des Katalysators beeinträchtigen und zu einer Beschädigung des Reaktors führen können.

Da es sich um eine Gleichgewichtsreaktion handelt, deren Gleichgewicht nicht auf die Seite der Produkte liegt, wird mit Hilfe einer Fördervorrichtung das Reaktionsgemisch mit den nicht umgesetzten Eduktgasen in einem Synthesekreislauf zirkuliert. Aus diesem Synthesekreislauf (Synthese-Loop) wird der Ammoniak abgetrennt und nicht umgesetzter Wasserstoff und Stickstoff innerhalb des Synthesekreislaufs erneut dem Katalysator zugeführt. Die Menge, die dem Synthesekreislauf als Ammoniak entnommen wird, wird durch eine entsprechende Menge Wasserstoff und Stickstoff ersetzt, die dem Synthesekreislauf als Frischgas ("Make-Up-Gas") zugeführt wird. Klassischerweise wird der für die Reaktion benötigte Wasserstoff aus Erdgas erzeugt, weshalb hierbei eine beträchtliche Menge an Kohlendioxid erzeugt wird.

Um Ammoniak nachhaltig herstellen zu können (so genannter "grüner Ammoniak"), wird Wasserstoff auch auf andere Weise als bei einer Umsetzung von Erdgas zu Synthesegas gewonnen. Hierbei ist insbesondere die Wasserspaltung ins Zentrum der Aufmerksamkeit gerückt. Neben photokatalytischen und solarthermischen Verfahren kann dabei Wasserstoff insbesondere durch Elektrolyse von Wasser in einer Elektrolysevorrichtung (einem "Elektrolyseur") gewonnen werden, wobei die dafür benötigte elektrische Energie aus regenerativer Energie erhalten wird. Die Verfügbarkeit regenerativer Energie ist jedoch nicht zeitlich konstant, sodass sich so elektrische Energie ebenfalls nur zeitlich variabel erzeugen lässt. Bei einer Stromerzeugung mittels Windkraftanlagen oder mittels Photovoltaik wird beispielsweise aufgrund wechselnder Windverhältnisse oder Sonneneinstrahlung zu unterschiedlichen Zeitpunkten typischerweise unterschiedlich viel elektrische Energie erzeugt, bei Flaute oder Sturm sowie in der Nacht oder bei bedecktem Himmel kann sogar sein, dass für längere Zeiträume nur sehr wenig oder keine elektrische Energie bereitgestellt werden kann. Auch wenn der Elektrolyseur diesen Schwankungen schnell und auch in einem weiten Lastbereich folgen kann, so stellt dieser der Ammoniaksyntheseanlage dann nur einen zeitlich sich ändernden Wasserstoffstrom zur Verfügung.

Natürlich gibt es Möglichkeiten, die Auswirkungen der schwankenden Verfügbarkeit regenerativer Energien etwas auszugleichen, indem die benötigte elektrische Energie aus unterschiedlichen regenerativen Energien gewonnen wird (beispielsweise aus einer Kombination einer Anlage für die Gewinnung von elektrischer Energie aus Sonnenlicht mit einer Anlage für die Gewinnung von elektrischer Energie aus Windkraft oder Wasserkraft). Zusätzlichen Ausgleich kann eine Zwischenspeicherung von elektrischer Energie, durch eine Anbindung der Anlage an konventionelle Stromnetze (in welche idealerweise aus regenerativen Energien gewonnener Strom eingespeist wird) oder die überbrückende Zwischenspeicherung von Wasserstoff in Wasserstofftanks oder von elektrischer Energie in Stromspeichern bieten. Allerdings erfordern derartige Ansätze einen nicht unerhebliche Maßnahmen, sodass sich die konstante Versorgung einer großtechnischen Ammoniaksyntheseanlage mit grünem Wasserstoff mit wirtschaftlich vertretbarem Aufwand nicht ohne weiteres realisieren lässt.

Schwankt die zur Verfügung stehende Wasserstoffmenge, so ändert sich die Auslastung des Ammoniaksynthesereaktors entsprechend. Dabei kann die zur Verfügung stehende Wasserstoffmenge sogar auf null zurückgehen, sodass die Produktion von Ammoniak im Ammoniaksynthesereaktor zum Erliegen kommt (sodass die Wärmemenge nicht mehr ausreicht, um die für die Reaktion benötigte Mindesttemperatur zu gewährleisten). Ohne ausreichende Einspeisung von Wasserstoff oder elektrischer Energie (etwa über externe Netzwerke oder eine Speicherinfrastruktur) kann die Ammoniaksyntheseanlage dann nur in Teillast betrieben werden kann (Teilauslastung; die Anlage wird dann bei einer Auslastung betrieben, die unterhalb einer Auslastung von 100 % liegt, also bei einer geringeren Auslastung als im regulären Produktionsbetrieb) oder muss sogar temporär ohne Produktion betrieben werden (kontinuierlicher Bereitschaftsbetrieb, "Hot Stand-By"). Sobald später wieder Wasserstoff produziert wird, müsste bei einem derartigen teilweisen Bereitschaftsbetrieb der Reaktor zunächst wieder mit einem Produktionsstart in einen Betriebszustand überführt werden, der für einen regulären Betrieb erforderlich ist. Der Übergang von einem Auslastungszustand in einen anderen Auslastungszustand (etwa vom Volllastbetrieb in einen Teillastbetrieb, von einem Teillastbetrieb in den Volllastbetrieb oder von einem Teillastbetrieb in einen anderen Teillastbetrieb) erfordert in herkömmlichen Anlagen einen komplexen Regeleingriff, um sicherzustellen, dass eine Produktion von Wasserstoff auch weiterhin erfolgt (weggleich auch in geringerem Umfang als im Volllastbetrieb), dass aber gleichzeitig die Komponenten der Ammoniaksyntheseanlage nicht geschädigt werden und ein Übergang in einen anderen Auslastungszustand auch weiterhin ohne ein langwieriges Anfahren möglich ist.

Um einen Betrieb bei unterschiedlichen Auslastungszuständen zu realisieren, sind an unterschiedliche Komponenten der Ammoniaksyntheseanlage Anpassungen vorzunehmen. Eine der wichtigsten Anlagenkomponenten, mit denen der Betrieb an den jeweiligen Auslastungszustand angepasst werden kann, ist dabei die Fördervorrichtung, mit welcher das Gasgemisch enthaltend Stickstoff, Wasserstoff und Ammoniak im Synthesekreislauf zyklisch gefördert wird. Eine derartige Fördervorrichtung weist typischerweise eine Saugseite und eine Druckseite auf, wobei das Gasgemisch auf der Saugseite in die Fördervorrichtung eintritt und diese auf der Druckseite wieder verlässt, um dann im Synthesekreislauf von der Druckseite über den Ammoniaksynthesereaktor erneut zur Saugseite gefördert zu werden.

Als Fördervorrichtungen kommen häufig insbesondere Turbozentrifugalkompressoren (Turbokompressoren) zum Einsatz. Fast alle Turbozentrifugalkompressoren weisen regulär eine Pumpgrenzregelung auf ("Anti-Surge Control"), mit Hilfe welcher ein Pumpen ("Surge") vermieden werden soll, also ein stoßweises Fördern aufgrund eines zu geringen Förderstroms. Ein solches Verhalten tritt auf, wenn bei einem bestimmten Druck der Durchsatz und damit der für den Betrieb des Turbozentrifugalkompressors erforderliche Mindestmassenstrom unterschritten (und damit die so genannte "Pumpgrenze"/ "Surge Line" überschritten) wird, wodurch es aufgrund eines dann zu kleinen Anströmwinkels an den Schaufeln des Zentrifugalkompressors zu Strömungsabrissen kommt. Infolge dieser Strömungsabrisse nimmt der Massenstrom weiter ab, sodass weitere Strömungsabrisse auftreten und die Druckdifferenz zwischen Saugseite und Druckseite nicht aufrechterhalten werden kann, weshalb ein Teil des zu fördernden Gases (im vorliegenden Fall also des zirkulierenden Gasgemischs) durch den Kompressor hindurch zurückströmt. Das durch die wiederholte Abfolge von Strömungsabrissen und innerer Rückströmung auftretende Pumpen hat einen Leistungsabfall des Fördervorgangs zur Folge und kann darüber hinaus auch zu einer Beschädigung der Kompressorschaufeln führen, schlimmstenfalls sogar zu einer Zerstörung des Turbozentrifugalkompressors. Um dies zu vermeiden ist bei nahezu allen Turbozentrifugalkompressoren eine Umblaseleitung vorgesehen, also eine äußere Umgehungsleitung ("Bypass") zur Umgehung des Turbokompressors, über welche das geförderte Gas außerhalb des Turbozentrifugalkompressors (im vorliegenden Fall also unter Umgehen des restlichen Synthesekreislaufs einschließlich des Konverters) zurückströmen kann, sodass die Druckdifferenz zwischen Saugseite und Druckseite aufrechterhalten werden kann. Dazu wird die Umblaseleitung bei Unterschreiten eines bestimmten Mindestförderstroms durch geregeltes Öffnen mindestens eines Umblaseventils freigegeben und bei Überschreiten des bestimmten Mindestförderstroms danach wieder geregelt abgesperrt.

In diesem Betrieb wird dann ein Teil des Gasstroms wiederholt von der Druckseite des Kompressors zu dessen Saugseite zurückgeführt ohne dabei den restlichen Synthesekreislauf zu durchlaufen. Infolge der wiederholten Kompression des Gases erwärmt sich dieses. Daher ist bei Turbozentrifugalkompressoren in der Regel in der Umgehungsleitung zusätzlich auch ein Kühler vorgesehen (Umblasekühler), in welchem das von der Druckseite direkt zur Saugseite zurückgeführte Gas gekühlt wird.

Die bei vielen Fördervorrichtungen vorgesehene Pumpgrenzregelungsanordnung lässt sich grundsätzlich auch dafür einsetzen, in einer Ammoniaksyntheseanlage eine Regelung bei unterschiedlichen Auslastungszuständen zu realisieren. Typische Anwendungsfälle von Pumpgrenzregelungsanordnungen zur Regelung herkömmlicher Ammoniaksyntheseanlagen sind etwa die Inbetriebnahme (das Anfahren) und das plötzliche Stilllegen ("Shut-Down") der Ammoniaksyntheseanlage: Hierbei wird die Umgehungsleitung größtmöglich geöffnet, sodass nahezu das gesamte im Synthesekreislauf geführte Gas unter Umgehung des Konverters von der Druckseite der Fördervorrichtung direkt zur Saugseite der Fördervorrichtung geleitet wird. Beim wiederholten Verdichten des gesamten Gasvolumens in der Fördervorrichtung erhöht sich dabei die Gastemperatur. Um zu verhindern, dass die Gastemperatur zunehmend verstärkt ("aufschaukelt") und zu sehr zunimmt, wird der durch die Umgehungsleitung rückgeführte Gasstrom im Kühler der Umgehungsleitung mittels Kühlwasser gekühlt. Die Rückführung des gesamten im Synthesekreislauf geführten Gases stellt also eine der wichtigsten Anwendungen für eine Umgehungsleitung in Ammoniaksyntheseanlagen dar, weshalb ihre Komponenten typischerweise grade auf eine solche Anwendung ausgelegt sind: So ist etwa die Kühlleistung des Kühlers in der Umgehungsleitung auf den Betriebsfall ausgelegt, dass der Volumenstrom am Eintritt der Fördervorrichtung in etwa dem gesamten Massenstrom bei Normalbetrieb (dem regulären Betrieb, also dem Produktionsbetrieb bei Vollauslastung) entspricht. Bei einer herkömmlichen Pumpgrenzregelung sieht hingegen der Regelungsfall zur Vermeidung eines Pumpens typischerweise vor, dass der minimale Volumenstrom 85 % des maximal möglichen Volumenstroms beträgt - wird dieser Grenzwert unterschritten, so wird die Umgehungsleitung geöffnet.

Wird die geregelte Umgehungsleitung der Pumpgrenzregelungsanordnung einer herkömmlichen Fördervorrichtung zur Regelung unterschiedlicher Auslastungen bei Ammoniaksyntheseanlagen eingesetzt, so ergeben sich einige Nachteile, aufgrund derer die Regelung unterschiedlicher Auslastungszustände ohne weitere Anpassungsmaßnahmen nicht funktionieren würde. Dies liegt unter anderem daran, dass bei der Pumpgrenzregelung bereits bei relativ geringfügigen Abweichungen vom maximal möglichen Volumenstrom ein Umblasebetrieb eingeleitet wird (typischerweise bei einem Volumenstrom, der geringer ist als 85 %-90 % des maximal möglichen Volumenstroms), wodurch bei einer klassischen Pumpgrenzregelung der Teilgasstrom, welcher über die Umblaseleitung rückgeführt wird, verhältnismäßig klein ausfällt. Anders ist dies bei einer Umgehung eines Konverters mittels der Umgehungsleitung einer Fördervorrichtung im Synthesekreislauf einer Ammoniaksyntheseanlage, wenn dort ein Teillastbetrieb der Anlage realisiert werden soll: Hierbei stellt grade die Inbetriebnahme und die plötzliche Abschaltung der Ammoniaksyntheseanlage einen typischen Anwendungsfall dar, bei welchem die Umblaseleitung geöffnet wird. Allerdings wird dann nicht bloß ein kleiner Teil des geförderten Gasstroms zurückgeführt, es kann vielmehr durchaus auch der gesamte Gasstrom rückgeführt werden. Doch auch selbst wenn ein solcher Betrieb realisiert würde, wäre die Umblasevorrichtung dann nicht ohne weiteres für einen Teillastbetrieb geeignet: Die Pumpgrenzregelung ist typischerweise dafür ausgelegt, einen maximalen Förderstrom aufrecht zu halten, also einen Betrieb möglichst dicht an der Volllast, einen "normalen Produktionsbetrieb". Wird der zur Ammoniaksynthese benötigte Wasserstoff unter Einsatz regenerativer Energien erzeugt, so schwankt die Verfügbarkeit dieses Edukts mitunter stark, weshalb zur Realisierung eines stabilen Betriebs beliebige Teillastbetriebe realisierbar sein müssen. Je nach zu realisierendem Auslastungsgrad muss die Anlage vielmehr dazu geeignet sein, einen beliebigen Teil des Kreislaufgasstroms (Synthesekreislaufstrom, Synthesekreislaufgasstrom, also den im Synthesekreislauf geführten Gasstrom) zurückzuführen - also von 100 % des Kreislaufgasstroms bei der Inbetriebnahme oder Abschaltung bis hin zu nahezu 0 % des Kreislaufgasstroms im regulären Betrieb bei nur leicht verminderter Wasserstoffeinspeisung.

Bei kleinen Teillasten (Anlagenteillasten) wird nur ein kleiner Teil des Wasserstoffs umgesetzt, der unter Volllast (Anlagenvolllast) umgesetzt wird. Daher wird ein verhältnismäßig großer Teil Kreislaufgasstroms unter Umgehung des Konverters von der Druckseite der Fördervorrichtung direkt zur Saugseite der Fördervorrichtung zurückgeleitet. Dieser Teil des Kreislaufgasstroms umgeht dabei nicht nur den Konverter, sondern auch die Ammoniakentnahmevorrichtung - einen Ammoniakabscheider, in welchem im Regelbetrieb Ammoniak aus dem Kreislaufgas entfernt wird, typischerweise durch Auskondensieren. Wird im Regelbetrieb ein Teil des Ammoniaks (oder der gesamte Ammoniak) als Zielprodukt aus der Ammoniaksyntheseanlage abgeführt, so wird dann im Konverter aufgrund des sich neu einstellenden chemischen Gleichgewichts in Übereinstimmung mit dem Massenwirkungsgesetz weiterer Ammoniak produziert. Im Teillastbetrieb steht häufig jedoch nicht ausreichend Wasserstoff zur Verfügung, sodass die Ammoniakproduktion verringert werden soll und daher kein oder nur wenig Ammoniak aus dem Kreislauf entnommen wird. Demzufolge weist im Teillastbetrieb das saugseitig in die Fördervorrichtung eingeleitete Kreislaufgas einen verhältnismäßig hohen Ammoniakgehalt auf (oft mehr als 20 Vol.-%). Wird dann das über die Umgehungsleitung rückgeführte Kreislaufgas im Umblasekühler gekühlt, so kann es gegebenenfalls auch außerhalb der Ammoniakentnahmevorrichtung auskondensieren und in flüssiger Form in die Fördervorrichtung eingebracht werden. Bei der Kompression des Kreislaufgases in der Fördervorrichtung kann zudem dann weiteres Ammoniak auskondensieren (während bei Normalbedingungen die Ammoniakverflüssigung erst bei Temperaturen unterhalb von -33 °C auftritt, liegt Ammoniak bei einem Druck von 10 bar bereits bei einer Temperatur von +20 °C als Flüssigkeit vor). Dies kann insgesamt zu einer Beschädigung der Fördervorrichtung führen. Daher ist es wünschenswert, dass in der Fördervorrichtung Ammoniak nicht in flüssiger Phase vorliegt, insbesondere nicht bei Eingang in die Fördervorrichtung, also an deren Saugseite.

Ein stabiler Betrieb wird dadurch erschwert, dass der Kühler in der Umgehungsleitung für eine Kühlleistung ausgelegt ist, die hinreichend groß ist, um 100 % des Kreislaufgasstroms zu kühlen, da beim Anfahren oder Stilllegen der Anlage der gesamte Kreislaufstrom über die Umgehungsleitung zurückgeführt wird. Bei einem Teillastbetrieb wird nur ein Teil des gesamten Kreislaufgasstroms zurückgeführt, wodurch dieser Teilstrom dann aufgrund der für einen höheren Durchsatz ausgelegten höheren Kühlleistung des Kühlers stärker als benötigt abgekühlt wird, sodass (mehr) Ammoniak auskondensiert, insbesondere bei niedrigen Teillasten mit höheren Ammoniakpartialdrücken.

Für einen Einsatz in Anlagen zur klimaneutralen Herstellung von Ammoniak ("grüne Ammoniakanlage" / Anlage zur Herstellung von "grünem Ammoniak" / "grüne Ammoniaksynthese") ist darüber hinaus auch folgenden Optimierungsaspekten Rechnung zu tragen, um das ursprünglich für eine Pumpgrenzregelung vorgesehene System auch zur Stabilisierung des Betriebs solcher Anlagen einsetzen zu können, obgleich diese Aspekte für eine Pumpgrenzregelung in herkömmlichen Anlagen nicht relevant sind:
- Auch bei niedrigen Teillasten in der Anlage soll der Volumenstrom in der Fördervorrichtung einerseits möglichst dicht an einem Wert von 85-90 % des nominalen Fördervolumenstroms für den regulären Betrieb unter Volllast liegen, da bei einem höheren Wert unnötig viel Energie zum Betrieb der Fördervorrichtung benötigt würde, andererseits soll unter Volllast der Minimalwert von 85 % des nominalen Fördervolumenstroms für den regulären Betrieb auch nicht unterschritten werden, damit die Sicherheit der Anlage gewährleistet ist.
- Typischerweise sind im Synthesekreislauf stromabwärts der Fördervorrichtung Vorrichtungen zum Einstellen der Gastemperatur des Kreislaufgases angeordnet wie Wärmetauscher (etwa Gas-Gas-Wärmetauscher) und Heizaggregate (etwa elektrische Heizaggregate). In Wärmetauschern wird die Wärme intern von einem primären Wärmemedium (dem Kreislaufgas) auf ein sekundäres Wärmemedium (dem Wärmetauscherfluid) übertragen, sodass die Wärmeenergie im Synthesekreislauf genutzt werden kann. Heizaggregate erwärmen etwaiges im Synthesekreislauf abgekühltes Kreislaufgas, sofern erforderlich. Um die Menge an Wärme minimieren zu können, die von den Heizaggregaten bereitgestellt werden muss, sollte die Austrittstemperatur des Gasstroms an der Druckseite der Fördervorrichtung möglichst hoch sein.
- Herkömmliche Fördervorrichtungen sind typischerweise auf eine Austrittstemperatur von 200 °C ausgelegt. Soll diese Temperatur überschritten werden, könnte nicht auf herkömmliche Fördervorrichtungen zurückgegriffen werden, vielmehr müssten Spezialanfertigungen zum Einsatz kommen, was unvorteilhaft wäre, da derartige Lösungen nicht bloß kostenintensiv sind, sondern diese in der Regel Einzelanfertigungen sein müssten, für welche keine Referenzkonstruktionen vorliegen. Bei herkömmlichen Fördervorrichtungen sollte im Regelbetrieb unter Berücksichtigung eines Sicherheitsbereichs von 30 °C zur Gewährleistung eines sicheren und stabilen Anlagenbetriebs eine Austrittstemperatur von maximal 170 °C nicht überschritten werden.

US 2022/388854 A1 offenbart eine Anlage und ein Verfahren zur Herstellung von Ammoniak. Die Anlage umfasst einen Synthesekreislauf (5) enthaltend eine Fördervorrichtung (6), eine Umgehungsleitung (15), einen Ammoniakreaktor (7) und einen Ammoniakabscheider (13). Die Umgehungsleitung (15) umfasst ein Regelventil (17), eine Steuerung (18) und einen Kühler (16). Die Umgehungsleitung (15) ist gegenläufig parallel zur Fördervorrichtung (6). Wasserstoff wird elektrolytisch mit erneuerbarer Energie hergestellt. Das Verfahren umfasst die Herstellung von Ammoniak. Im Teillastbetrieb wird Synthesegas stromabwärts der Fördervorrichtung in die Umgehungsleitung zumindest teilweise geleitet, gekühlt und dann stromaufwärts der Fördervorrichtung wieder zugeführt. Eine Umgehungsleitung mit einer weiteren Umgehungsleitung zur zumindest teilweisen Umgehung des Kühlers der ersten Umgehungsleitung ist nicht offenbart.

Aufgabe der Erfindung ist es daher, ein Verfahren und eine Vorrichtung bereitzustellen, welches die obigen Nachteile vermeidet und welches insbesondere einen stabilen Betrieb bei unterschiedlichen Teillasten ermöglicht, ohne dass bei geringen Teillasten Ammoniak in erheblichen Umfang auskondensiert.

Diese Aufgabe wird durch die Ammoniaksyntheseanlage mit den in Patentanspruch 1 angegebenen Merkmalen sowie durch das Verfahren zum Betreiben einer Ammoniaksyntheseanlage mit den in Anspruch 8 angegebenen Merkmalen gelöst. Vorteilhafte Weiterbildungen ergeben sich aus den Unteransprüchen, der nachfolgenden Beschreibung sowie den Zeichnungen.

Eine derartige Ammoniaksyntheseanlage zeichnet sich folglich dadurch aus, dass die erste Umgehungsleitung weiterhin eine zweite Umgehungsleitung aufweist, welche strömungstechnisch gleichläufig parallel zur Abkühlvorrichtung angeordnet ist und welche zum absperrbaren Hindurchleiten eines zweiten Teilstroms des ersten Teilstroms zum Umgehen der Abkühlvorrichtung eingerichtet ist.

Eine Ammoniaksyntheseanlage ist eine Anlage, die zur Herstellung von Ammoniak aus Wasserstoff und Stickstoff vorgesehen ist. Eine derartige Anlage weist einen Synthesekreislauf auf, also einen Bereich, welcher zumindest teilweise für die Reaktionsmischung kreislaufartig-zyklisch durchlaufbar aufgebaut ist und dafür eingerichtet ist, dass innerhalb dieses Synthesekreislaufes die Synthese des Ammoniaks stattfindet. Als wesentliches funktionales Element weist der Synthesekreislauf einen Konverter (Ammoniakkonverter, Reaktor, Synthesereaktor, Ammoniaksynthesereaktor) auf, der eingerichtet ist zum katalytischen Umsetzen von Stickstoff und Wasserstoff zumindest teilweise zu Ammoniak, üblicherweise nach dem Haber-Bosch-Verfahren. Beim Haber-Bosch-Verfahren wird die Reaktion typischerweise in Anwesenheit eines Eisenkatalysators bei Temperaturen aus einem Bereich von etwa 350 °C bis etwa 500 °C und bei einem Druck von mehr als 100 bar gemäß der Reaktionsgleichung 3 H₂ + N₂ 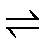 2 NH₃ + 92.28 kJ/mol durchgeführt. Das zirkulierende Gasgemisch weist als Hauptbestandteile Stickstoff, Wasserstoff und Ammoniak auf, darüber hinaus kann es aber gegebenenfalls auch weitere Bestandteile enthalten. Es wird in den Konverter über einen Einlass eingeleitet, tritt dort in Kontakt mit dem Katalysator und wird aus dem Konverter über einen Auslass herausgeleitet, wobei das herausgeleitete Gasgemisch im Produktionsbetrieb (insbesondere bei einer Auslastung von 100 %) einen höheren Ammoniakgehalt aufweist als das eingeleitete Gasgemisch (und dementsprechend einen niedrigeren Stickstoffgehalt und einen niedrigeren Wasserstoffgehalt als das eingeleitete Gasgemisch).

Im Synthesekreislauf wird das Gasgemisch mit Hilfe einer Fördervorrichtung im Kreis geführt (zyklisch gefördert). Bei der Fördervorrichtung handelt es sich um einen Kompressor (Verdichter), der eingerichtet und angeordnet ist, um das Gasgemisch im Synthesekreislauf in eine Förderrichtung zyklisch zu fördern, die Synthesekreislaufförderrichtung. Das Fördern erfolgt dabei durch Druckunterschiede über die Fördervorrichtung, welche durch die Fördervorrichtung aufgebaut werden. Demzufolge weist die Fördervorrichtung eine Saugseite und eine Druckseite auf. Über die Saugseite nimmt die Fördervorrichtung das Gasgemisch aus dem Synthesekreislauf auf und gibt dies über die Druckseite wieder an den Synthesekreislauf ab. Dazu ist der Einlass des Konverters mit der Druckseite der Fördervorrichtung strömungstechnisch verbunden und der Auslass des Konverters mit der Saugseite der Fördervorrichtung strömungstechnisch verbunden. "Strömungstechnisch verbunden" bedeutet, dass eine durchströmbare Verbindung zwischen der Druckseite der Fördervorrichtung und dem Einlass des Konverters beziehungsweise dem Auslass des Konverters und der Saugseite der Fördervorrichtung besteht, wobei dadurch nicht ausgeschlossen ist, dass diese Verbindung in der durchströmbaren Strecke (Förderstrecke) dazwischen über separate Elemente umgelenkt oder anderweitig geregelt oder sogar abgesperrt werden kann.

Stromabwärts vom Konverter (die Begriffe "stromabwärts" und "stromaufwärts" beziehen sich hierbei auf die Synthesekreislaufförderrichtung, also die Förderrichtung des Gasgemischs innerhalb des Synthesekreislaufs und/oder gegebenenfalls innerhalb etwaiger Umgehungsleitungen) wird im Produktionsbetrieb (insbesondere bei einem Betrieb bei Volllast, also bei einer Auslastung von 100 %, oder in der Nähe einer Auslastung von 100 %) in einer Ammoniakentnahmevorrichtung Ammoniak aus dem Synthesekreislauf entfernt (typischerweise kryogen im Rahmen einer Tieftemperaturluftzerlegung, in der das Gasgemisch abgekühlt wird, wobei Ammoniak in flüssiger Form auskondensiert und vom Gasstrom abgetrennt werden kann, jedoch sind auch andere selektive Verfahren zur Gasabtrennung möglich, beispielsweise eine Druckwechsel-Adsorption / "Pressure Swing Adsorption"). Stromabwärts oder in der Ammoniakentnahmevorrichtung werden dem Gasstrom im Synthesekreislauf entsprechend Edukte (insbesondere Wasserstoff und Stickstoff) in einer Eduktzuführung zugeführt (als Frischgas), bevor der Gasstrom erneut in den Konverter eingeleitet wird.

Neben der Eduktzuführung, der Fördervorrichtung, dem Konverter und der Ammoniakentnahmevorrichtung kann der Synthesekreislauf weitere Elemente aufweisen, etwa Kühlvorrichtungen zum Abkühlen des Gasgemisch, nachdem es infolge der bei der Reaktion anfallenden Wärmetönung erhitzt wurde (insbesondere Kühler, Abhitzedampferzeuger oder Dampfüberhitzer), Heizvorrichtungen, um das Gasgemisch stromaufwärts vom Konverter auf eine Temperatur zu erwärmen, die erforderlich ist, um im Konverter die Umsetzung der Edukte zum Produkt Ammoniak zu gewährleisten (insbesondere elektrische Heizvorrichtungen) und/oder kombinierte Heiz-/Kühlvorrichtungen, um überschüssige Wärmeenergie des Gasgemischs nach Austritt aus dem Konverter dafür zu nutzen, das Gasgemisch vor Eintritt in den Konverter zu erwärmen (insbesondere Gas-Gas-Wärmetauscher).

Das Edukt Stickstoff wird in den Synthesekreislauf über eine Stickstoffvorrichtung eingebracht, in welcher Stickstoff typischerweise aus der Luft erhalten wird, etwa in einer chemischen oder kryogenen Aufbereitung von Luft (beispielsweise mittels fraktionierter kryogener Auftrennung im Rahmen einer Tieftemperaturluftzerlegung) oder durch selektive Adsorption (beispielsweise im Rahmen einer Druckwechsel-Adsorption).

Das Edukt Wasserstoff wird von einer Wasserstoffvorrichtung erhalten, also einer Vorrichtung, welche angepasst und eingerichtet ist, Wasserstoff bereitzustellen. Eine derartige Wasserstoffvorrichtung dient als Wasserstoffquelle, um das Reaktionsedukt Wasserstoff für die Reaktion zum Ammoniak bereitzustellen. Über die Wasserstoffvorrichtung wird molekularer Wasserstoff in den Synthesekreislauf eingebracht. Typische Wasserstoffvorrichtungen können etwa Vorrichtungen zum Bereitstellen von Wasserstoff beinhalten, welcher dann in der Wasserstoffvorrichtung selber erzeugt wird (etwa in Reaktoren zur Kohlevergasung, zum Dampfreformieren, zum autothermen Reformieren, zur partiellen Oxidation, zur Elektrolyse, zur Pyrolyse, zur Gewinnung aus Biomasse und dergleichen) oder aber Vorrichtungen zum Zuführen von Wasserstoff, der anderswo erzeugt wird (etwa Wasserstoffpipelines, über welche die Ammoniaksyntheseanlage an ein Wasserstoffversorgungsnetzwerk angeschlossen ist, Synthesegaspipelines, Wasserstofftanks und dergleichen).

An der Fördervorrichtung ist eine Umgehungsleitung vorgesehen, die erste Umgehungsleitung. Diese erste Umgehungsleitung ist von der Saugseite der Fördervorrichtung zu der Druckseite der Fördervorrichtung strömungstechnisch gegenläufig parallel zur Fördervorrichtung angeordnet und zum absperrbaren Rückführen eines ersten Teilstroms des Gasgemischs von der Druckseite der Fördervorrichtung zu der Saugseite der Fördervorrichtung eingerichtet. Das Rückführen ist das Leiten zumindest eines Teils des Gasstroms oder des gesamten Gasstroms von der Druckseite der Fördervorrichtung zur Saugseite der Fördervorrichtung unter Umgehen der übrigen funktionalen Elemente des Synthesekreislaufs mit Ausnahme der Fördervorrichtung. (also des größten Teils derjenigen Komponenten des Synthesekreislaufs wie etwa dem Konverter oder einer etwaigen Ammoniakentnahmevorrichtung, welche im Unterschied zu Rohrleitungen, Abzweigungen und dergleichen zu mehr als zu einem bloßen Transport des Gasstroms und/oder im Unterschied zu Messfühlervorrichtungen, Durchflussregelungsvorrichtungen wie etwa Ventilen und/oder anderen Absperrvorrichtungen und dergleichen zu mehr als einem bloßen Überwachen und/oder Regeln der Strömung des Gasstroms vorgesehen und eingerichtet sind). Das "absperrbare Rückführen" ist insbesondere ein Rückführen über zumindest eine (Rückführungs-)Leitung, die dazu eingerichtet ist, neben einem vollständig nicht abgesperrten Zustand (vollständig geöffneter/durchgängiger Zustand) auch teilweise abgesperrt zu werden (und dementsprechend auch teilweise nicht abgesperrt oder geöffnet zu werden / durchgängig zu sein) oder vollständig abgesperrt zu werden, vorgenanntes etwa manuell oder auch durch eine dafür vorgesehene Regelungsanordnung. Durch das Absperren wird die Rückführung des im vollständig geöffneten Zustand durch die Leitung hindurchströmenden Fluids zunächst auf eine bestimmte Teilmenge eingeschränkt (im teilweise abgesperrten Zustand und damit im teilweise geöffneten Zustand, wobei die Teilmenge von dem Grad des Teilabsperrens abhängt) oder die Rückführung verhindert/blockiert (im vollständig abgesperrtem Zustand).

Damit ist die erste Umgehungsleitung also strömungstechnisch gegenläufig parallel zur Fördervorrichtung vorgesehen (sodass der durch sie hindurchtretende Gasstrom eine Strömungsrichtung hat, die der Strömungsrichtung des parallelen Leitungsabschnitts zwischen Saugseite und Druckseite der Fördervorrichtung gegenläufig ist), gleichzeitig ist die erste Umgehungsleitung aber auch strömungstechnisch gleichläufig parallel zu den übrigen funktionalen Elementen des Synthesekreislaufs (also etwa dem Konverter und einer etwaigen Ammoniakentnahmevorrichtung) mit Ausnahme der Fördervorrichtung angeordnet. Dadurch ist es möglich, dass zumindest ein Teilstrom des Gasstroms oder der gesamte Gasstrom durch Öffnen der ersten Umgehungsleitung an den funktionalen Elementen des Synthesekreislaufs vorbeigeleitet wird, die in Strömungsrichtung stromabwärts der Druckseite der Fördervorrichtung und gleichzeitig stromaufwärts der Saugseite der Fördervorrichtung angeordnet sind (sodass also diejenigen funktionalen Elemente des Synthesekreislaufs umgangen werden, die in Strömungsrichtung zwischen dem Abzweigungspunkt der ersten Umgehungsleitung an der Druckseite der Fördervorrichtung und dem Abzweigungspunkt der ersten Umgehungsleitung an der Saugseite der Fördervorrichtung angeordnet sind).

Die Anordnung eines ersten Elements "strömungstechnisch gegenläufig parallel" zu einem zweiten Element bedeutet also, dass das erste Element (hier die erste Umgehungsleitung) im Fließbild parallel zum zweiten Element angeordnet ist (hier der Fördervorrichtung), dass aber das erste Element im Vergleich zu dem zweiten Element mit umgekehrter Durchströmungsrichtung durchströmt wird (hier wird die erste Umgehungsleitung von der Druckseite der Förderrichtung zur Saugseite der Förderrichtung durchströmt während die Fördervorrichtung selber intern von ihrer Saugseite zu ihrer Druckseite durchströmt wird). Daher ist die erste Umgehungsleitung also eingerichtet, von der Druckseite der Fördervorrichtung aus die übrigen funktionalen Elemente des Synthesekreislaufs zu umgehen (hier die übrigen funktionalen Elemente des Synthesekreislaufs mit Ausnahme der Fördervorrichtung) und den Gasstrom somit von der Druckseite der Fördervorrichtung zur Saugseite der Fördervorrichtung zu leiten, um so einen Betrieb bei unterschiedlichen Teillasten zu realisieren. Die Anordnung eines ersten Elements "strömungstechnisch gleichläufig parallel" zu einem zweiten Element bedeutet demnach, dass das erste Element (hier die erste Umgehungsleitung) im Fließbild parallel zum zweiten Element (hier den übrigen funktionalen Elementen des Synthesekreislaufs mit Ausnahme der Fördervorrichtung) angeordnet ist, wobei aber das erste Element mit derselben Durchströmungsrichtung durchströmt wird wie das zweite Element, es liegt eine damit also eine gleichsinnige Anordnung der allgemeinen Strömungspfade durch die Fördervorrichtung und der allgemeinen Strömungspfade durch die übrigen funktionalen Elemente des Synthesekreislaufs mit jeweils gleicher allgemeiner Durchströmungsrichtung vor, sodass ein Teilstrom des Gesamtgasstroms durch die Fördervorrichtung und ein anderer Teilstrom des Gesamtgasstroms durch die übrigen funktionalen Elemente des Synthesekreislaufs geleitet wird. Damit ist nicht ausgeschlossen, dass die für ein solches Umgehen vorgesehene erste Umgehungsleitung ihrerseits weitere funktionale Elemente aufweisen kann, beispielsweise eine Abkühlvorrichtung, welche insbesondere dazu eingerichtet ist, um den Transport des Gasstroms von der Druckseite der Förderrichtung zur Saugseite der Förderrichtung zu stabilisieren.

Die erste Umgehungsleitung weist dabei eine Abkühlvorrichtung auf, die zum Kühlen des ersten Teilstroms des Gasgemischs eingerichtet ist. Mit Hilfe der Abkühlvorrichtung soll insbesondere ein Erwärmen des über die erste Umgehungsleitung rückgeführten Gasstroms infolge sukzessive wiederholten Komprimierens in der Fördervorrichtung verhindert werden. Dabei kann es sich grundsätzlich um beliebige Vorrichtungen handeln, die zur Wärmeabfuhr des Gasstroms vorgesehen sind, beispielsweise Gaskühler, Flüssigkeitskühler, Wärmetauscher wie solche für direkte, halbdirekte oder indirekte Wärmeübertragung, Rekuperatoren, Regeneratoren beispielsweise Plattenkühler, Rohrwärmeübertrager, Rohrbündelwärmeübertrager und dergleichen. Die Abkühlvorrichtung der Umgehungsleitung ist hier als Teilstrecke der gesamten Umgehungsstrecke vorgesehen, diese ist also in strömungstechnischer Hinsicht in Reihe zur übrigen Umgehungsleitung angeordnet (sequenziell, hintereinander oder verschränkt hintereinander). Hinsichtlich der Kühlleistung ist die Abkühlvorrichtung der ersten Umgehungsleitung bevorzugterweise auf den zu erwartenden Gasstrom unter maximaler Volllast der gesamten Anlage dimensioniert, sodass demzufolge bis zu 100 % des umlaufenden Kreislaufgasvolumens rückgeführt und bei Normalbetrieb gekühlt werden können (also für einen kontinuierlichen "heißen Bereitschaftsbetrieb" (Hot Stand-By), bei welchem die Temperatur in der Anlage weitgehend aufrechterhalten wird). **In** dieser Ausgestaltung würde ein komplettes Abschalten (Shut-Down) lediglich einen Spezialfall mit 100 % der Kreislaufgasmenge darstellen).

Erfindungsgemäß ist weiterhin vorgesehen, dass die erste Umgehungsleitung eine zweite Umgehungsleitung aufweist, welche strömungstechnisch gleichläufig parallel zur Abkühlvorrichtung angeordnet ist und welche zum absperrbaren Hindurchleiten eines zweiten Teilstroms des ersten Teilstroms zum Umgehen der Abkühlvorrichtung eingerichtet ist. Das "absperrbare Hindurchleiten" ist insbesondere ein Hindurchleiten über zumindest eine Leitung, die dazu eingerichtet ist, neben einem vollständig nicht abgesperrten Zustand (vollständig geöffneten/durchgängigen Zustand) auch teilweise abgesperrt zu werden (und dementsprechend auch teilweise nicht abgesperrt oder geöffnet zu werden / durchgängig zu sein) oder vollständig abgesperrt zu werden, etwa manuell oder auch durch eine dafür vorgesehene Regelungsanordnung. Durch das Öffnen wird zunächst ein Hindurchleiten des im vollständig abgesperrten Zustand nicht durch die Leitung hindurchtretenden Fluids für eine bestimmte Teilmenge ermöglicht (im teilweise geöffneten Zustand und damit im teilweise abgesperrten Zustand, wobei die Teilmenge von dem Grad der Teilöffnung abhängt) oder das Hindurchleiten verhindert/blockiert (im vollständig abgesperrtem Zustand). Funktionell stellt die zweite Umgehungsleitung einen Teil der ersten Umgehungsleitung auch dann dar, wenn sie von diesem baulich getrennt vorliegt.

Damit ist die zweite Umgehungsleitung also strömungstechnisch gleichläufig parallel zur Abkühlvorrichtung vorgesehen, wodurch es möglich ist, dass zumindest ein Teilstrom des Gasstroms oder der gesamte Gasstrom durch Öffnen der zweiten Umgehungsleitung an der Abkühlvorrichtung vorbeigeleitet wird, sodass also die Abkühlvorrichtung umgangen wird). Im Sinne der vorliegenden Erfindung kann eine derartige zweite Umgehungsleitung auch strömungstechnisch parallel zu der gesamten Strecke der ersten Umgehungsleitung angeordnet sein, also ohne von der ersten Umgehungsleitung unmittelbar abzuzweigen.

Dabei ist es insbesondere vorteilhaft, wenn die erste und die zweite Umgehungsleitung und deren Regelungsanordnung, welche das Hindurchleiten und Absperren der ersten und der zweiten Umgehungsleitung steuert oder regelt, derart eingerichtet und angepasst ist, dass der Volumenstrom an der Saugseite der Fördervorrichtung einen minimalen Wert von 85 % des maximalen Volumenstroms (Auslegungsstromes) aufweist und diesen nicht unterschreitet. Zusätzlich oder stattdessen kann es vorteilhaft sein, wenn die Austritttemperatur des Gasstroms an der Druckseite der Fördervorrichtung einen maximalen Wert von 170 °C nicht überschreitet, wobei diese im Hinblick auf die Wärme- und Energiebilanz des Synthesekreislaufs aber insgesamt bei einem heißen Bereitschaftsbetrieb möglichst hoch sein sollte, damit etwaige Heizaggregate nur wenig zusätzliche Wärmeenergie in die Anlage einbringen müssen; ein maximaler Wert von 170 °C ermöglicht bei herkömmlichen Kompressoren, welche häufig für Gas mit einer maximalen Eintrittstemperatur von 200 °C ausgelegt sind, eine hinreichend große Sicherheitsreserve gegenüber kurzfristigen Temperaturschwankungen . Konkretere Ausgestaltungen dieser Regelungsbedingungen für die Anlage sind im Zusammenhang mit dem Verfahren ausgeführt.

Bei einer vorteilhaften Ausgestaltung der erfindungsgemäßen Ammoniaksyntheseanlage ist insbesondere vorgesehen, dass die erste Umgehungsleitung so angeordnet ist, dass sie einen Bereich des Synthesekreislaufs, der in Synthesekreislaufförderrichtung stromabwärts der mindestens einen Fördervorrichtung und stromaufwärts des mindestens einen Konverters angeordnet ist, mit einem Bereich des Synthesekreislaufs strömungstechnisch verbindet, der in Synthesekreislaufförderrichtung stromaufwärts der mindestens einen Fördervorrichtung und stromabwärts des mindestens einen Konverters angeordnet ist (bevorzugt dabei auch stromabwärts der Ammoniakentnahmevorrichtung), und wobei die erste Umgehungsleitung eingerichtet ist, das Gasgemisch in den ersten Teilstrom und einen ersten Reststrom aufzuteilen, wenn die erste Umgehungsleitung nicht vollständig abgesperrt ist, und, während der erste Reststrom dem Konverter zugeführt wird, den ersten Teilstrom unter Umgehen des Konverters von der Druckseite der Fördervorrichtung durch die erste Umgehungsleitung zur Saugseite der Fördervorrichtung zu leiten, wobei die zweite Umgehungsleitung so angeordnet ist, dass sie einen Bereich der ersten Umgehungsleitung, welcher in Durchströmrichtung stromaufwärts der Abkühlvorrichtung angeordnet ist, mit einem Bereich der ersten Umgehungsleitung strömungstechnisch verbindet, der in Durchströmrichtung stromabwärts der Abkühlvorrichtung angeordnet ist, und wobei die zweite Umgehungsleitung eingerichtet ist, den ersten Teilstrom in der ersten Umgehungsleitung in den zweiten Teilstrom und einen zweiten Reststrom aufzuteilen, wenn die zweite Umgehungsleitung nicht vollständig abgesperrt ist, und, während der zweite Reststrom der Abkühlvorrichtung zugeführt wird, den zweiten Teilstrom unter Umgehen der Abkühlvorrichtung durch die zweite Umgehungsleitung zu leiten (sodass dieser ebenfalls nicht durch die übrigen funktionalen Elemente des Synthesekreislaufs geleitet wird.

Bei einer vorteilhaften Ausgestaltung der erfindungsgemäßen Ammoniaksyntheseanlage ist insbesondere vorgesehen, dass die Ammoniaksyntheseanlage weiterhin eine Wasserstoffvorrichtung aufweist, welche eingerichtet ist, Wasserstoff zumindest teilweise durch einen Elektrolyseur bereitzustellen, insbesondere wobei der Elektrolyseur mit aus regenerativen und zumindest teilweise schwankenden Energien gewonnener elektrischen Energie betrieben wird. Eine Wasserstoffvorrichtung demnach ist eine Vorrichtung, die vorgesehen ist, Wasserstoff bereitzustellen, in reiner Form oder als Gemisch mit anderen Gasen. Dies beinhaltet jegliche Wasserstoffquelle, in welcher Wasserstoff erzeugt, gespeichert oder lediglich hindurchgeleitet wird, beispielsweise eine Versorgungsleitung eines externen Wasserstoffnetzwerks oder Vorrichtungen zur Erzeugung von Wasserstoff in biologischen Prozessen, in einer Pyrolyse von Kohlenwasserstoffen (wie etwa der Methanpyrolyse) oder in einer thermischen Wasserspaltung, etwa in einem Sonnenofen. Vorliegend ist die Wasserstoffvorrichtung insbesondere auch eine Vorrichtung, welche eingerichtet ist, Wasserstoff zumindest teilweise oder auch vollständig durch einen Elektrolyseur bereitzustellen, also durch eine Vorrichtung, in der Elektrolyse betrieben wird, in welcher also im Rahmen einer Elektrolyse aus einem Eduktmaterial mit Hilfe von elektrischem Strom Wasserstoff gewonnen wird. Typischerweise ist das Eduktmaterial Wasser, sodass in einem derartigen Elektrolyseur eine Wasserelektrolyse betrieben wird. Für eine Wasserelektrolyse kann das Wasser dabei neutral sein, es kann aber auch Wasser mit einem pH-Wert kleiner als 7 (saure Elektrolyse) oder größer als 7 sein (basische Elektrolyse), wobei das Wasser darüber hinaus gegebenenfalls auch andere gelöste Substanzen enthalten kann, beispielsweise Salze. "Zumindest teilweise" bedeutet, dass entweder die gesamte benötigte Wasserstoffmenge oder aber nur eine Teilmenge des benötigten Wasserstoffs mittels Elektrolyse gewonnen wird, während die verbleibende Menge anderweitig bereitgestellt werden kann, insbesondere wenn die mittels Elektrolyse gewonnene Teilmenge mindestens 30 Vol.-% des Wasserstoffbedarfs ausmacht, bevorzugt mindestens 50 Vol.-%, besonders bevorzugt mindestens 90 Vol.-% oder sogar mindestens 99 Vol.-%. Üblicherweise ist ein derartiger Elektrolyseur direkt an die Ammoniaksyntheseanlage angebunden, jedoch kann auch eine Anbindung über die Leitung eines Wasserstoffnetzwerks möglich sein.

Bei der Wasserelektrolyse ist es insbesondere sinnvoll, wenn der Elektrolyseur mit elektrischer Energie betrieben wird, die aus regenerativen und zumindest teilweise schwankenden Energien (regenerativen / erneuerbaren Energie) gewonnen wird, also mit regenerativ erzeugter elektrischer Energie, beispielsweise mit elektrischer Energie, gewonnen aus Windenergie, Sonnenenergie, Bioenergie, Wasserkraft oder Geothermie. (mitunter kann auch der Betrieb eines Elektrolyseurs sinnvoll sein, der mit elektrischer Energie aus Kernenergie betrieben wird; der so erzeugte "rosa Wasserstoff" (auch "rote Wasserstoff", "pinke Wasserstoff" oder "violette Wasserstoff" ist zumindest hinsichtlich der Kohlendioxidbilanz vorteilhafter als durch Reformierung fossiler Brennstoffe erhaltener "grauer Wasserstoff" oder als "schwarzer Wasserstoff" und "brauner Wasserstoff", für deren Herstellung elektrische Energie eingesetzt wird, welche aus Steinkohle beziehungsweise Braunkohle stammt) Einer der Vorteile ergibt sich daraus, dass der Prozess auf die speziellen Erfordernisse von regenerativ erzeugter elektrischer Energie angepasst und daher besonders für eine derartige Kombination geeignet ist, weshalb ein Einsatz hier besonders vorteilhaft ist: Bei vielen regenerativen Energien treten Schwankungen auf (beispielsweise infolge des Tag-Nacht-Zyklus des Sonnenlichts, die wechselnden Windverhältnisse oder die Gezeiten). Infolge dieser Schwankungen treten nach der Umwandlung der regenerativen Energie in elektrische Energie Schwankungen bei der Bereitstellung von Edukten auf, die mit Hilfe dieser elektrischen Energie hergestellt werden, also des Wasserstoffs. Die vorliegende Erfindung ist besonders geeignet, derartige Schwankungen bei der Bereitstellung der Edukte der Ammoniaksynthese zu kompensieren.

Bei einer vorteilhaften Ausgestaltung der erfindungsgemäßen Ammoniaksyntheseanlage ist insbesondere vorgesehen, dass die Fördervorrichtung ein Zentrifugalkompressor ist und die erste Umgehungsleitung eine geregelt absperrbare und geregelt öffenbare Umblaseleitung einer Pumpgrenzregelungsanordung. Ein Zentrifugalkompressor (Radialverdichter) ist ein Turbokompressor (Turboverdichteter), also ein rotierender Verdichter, insbesondere ein Axialkompressor, ein Radialkompressor oder ein kombinierter Axial-Radial-Kompressor, beispielsweise ein Diagonalkompressor, welcher zum Komprimieren und Fördern von gasförmigen Fluiden vorgesehen ist und typischerweise ein Druckgehäuse mit entsprechenden Leitvorrichtungen, eine Welle mit mindestens einem daran befestigten Laufschaufelrad oder einer daran aufgezogenen Laufschaufelreihe, in der Regel ein Flügelrad, sowie einen zum Druckaufbau angepassten Verlangsamungsbereich (Diffusor) aufweist. In derartigen Zentrifugalkompressoren ist typischerweise eine Pumpgrenzregelungsanordnung konstruktiv vorgesehen, um ein unerwünschtes Pumpen zu vermeiden. Die Umblaseleitung eines Zentrifugalkompressors lässt sich - gegebenenfalls nach Anpassungsmaßnahmen - als erste Umgehungsleitung nutzen und enthält häufig bereits eine Kühlvorrichtung, weshalb eine solche Ausgestaltung die Verwendung regulärer Aggregate mit hoher Arbeitseffizienz bei gleichzeitig integrierter Bauweise ermöglicht.

Bei einer vorteilhaften Ausgestaltung der erfindungsgemäßen Ammoniaksyntheseanlage ist insbesondere vorgesehen, dass die erste Umgehungsleitung ein Absperrelement aufweist, das eingerichtet ist zum Beschränken und/oder Versperren des Strömungswegs durch die erste Umgehungsleitung. Bei dem Absperrelement handelt es sich typischerweise um ein Element zum Absperren oder Steuern des Durchflusses von Gasen durch eine Leitung, beispielsweise um ein Absperrorgan oder um ein strömungsumleitendes Element, bei welchem die absperrende oder umleitende Wirkung veränderbar ist, üblicherweise etwa manuell oder mit Hilfe einer separaten Regelungsanordnung. Typische Absperrelemente sind für einen zweistufigen Regelungsfall (nur offener oder verschlossener/geschlossener Zustand) oder einen mehrstufigen Regelungsfall (Dosierung zwischen offenem und verschlossenen Zustand) angepasst, beispielsweise Absperrklappen, Absperrschieber, Absperrhähne, Ventile oder Strömungsleitbleche, jedoch lassen sich hier grundsätzlich auch alle anderen Absperrelemente mit entsprechender Funktionalität einsetzen. Das Absperrelement in der ersten Umgehungsleitung ist insbesondere so angeordnet, dass es den Strömungsweg durch die erste Absperrungsleitung komplett versperren kann, weshalb es in Durchströmungsrichtung der ersten Umgehungsleitung stromaufwärts oder stromabwärts vom Abkühlelement angeordnet ist.

Mit Hilfe des Absperrelements direkt in der ersten Umgehungsleitung wird also der Strömungsweg durch die erste Umgehungsleitung freigegeben oder blockiert. Beim Freigeben wird (temporär) ein Teilstrom des Gesamtgasstroms des Synthesekreislaufs durch die erste Umgehungsleitung geleitet (dies kann auch der gesamte Gasstrom sein, da durch die Abkühlvorrichtung ein etwaiger kontinuierlicher Temperaturanstieg wirksam vermieden werden kann). Auf diese Weise lassen sich für die Anlage unterschiedliche Betriebszustände realisieren, sodass sich zum Teil unterschiedliche Auslastungszustände realisieren lassen, wie sie etwa bei einer zeitlich wechselnden Versorgung mit Edukten wie Wasserstoff benötigt wird.

Bei einer vorteilhaften Ausgestaltung der erfindungsgemäßen Ammoniaksyntheseanlage ist insbesondere vorgesehen, dass die zweite Umgehungsleitung ein Absperrelement aufweist, das eingerichtet ist zum Beschränken und/oder Versperren des Strömungswegs durch die zweite Umgehungsleitung. Mit Hilfe des Absperrelements in der zweiten Umgehungsleitung wird also der Strömungsweg durch die zweite Umgehungsleitung freigegeben oder blockiert. Beim Freigeben wird ein Teilstrom des Gasstroms in der ersten Umgehungsleitung (temporär) durch die zweite Umgehungsleitung geleitet (je nach den Strömungsverhältnissen im übrigen Bereich der ersten Umgehungsleitung kann dies auch der gesamte Gasstrom durch die erste Umgehungsleitung sein, etwa, wenn der Strömungsweg im übrigen Teil der ersten Umgehungsleitung mit weiteren Absperrelementen verschlossen wird, wobei die erste Umgehungsleitung insgesamt funktionstüchtig bleibt indem der Teilstrom, welcher an der Abkühlvorrichtung vorbeigeführt wird, nicht durch die übrigen funktionalen Elemente des Synthesekreislaufs geleitet wird). Auf diese Weise kann infolge der zumindest teilweisen Umgehung der Abkühlvorrichtung auch bei unterschiedlichen Auslastungsgraden und unterschiedlicher Durchströmung der ersten Umgehungsleitung (insbesondere bei einer geringen Durchströmung der ersten Umgehungsleitung) sichergestellt werden, dass in der Fördervorrichtung die Temperatur nicht derartig niedrig ist, dass dort Ammoniak aus dem Gasstrom auskondensiert, wodurch ein sicherer und korrosionsarmer Betrieb der Anlage auch bei unterschiedlichsten Auslastungsgraden gewährleistet wird.

Bei einer vorteilhaften Ausgestaltung der erfindungsgemäßen Ammoniaksyntheseanlage ist insbesondere vorgesehen, dass die Ammoniaksyntheseanlage eine Messvorrichtung und eine mit der Messvorrichtung verbundene Regelungsvorrichtung aufweist, wobei die Messvorrichtung zum Erfassen mindestens einer Messgröße des Gasgemischs eingerichtet ist, insbesondere der Temperatur, des Drucks und/oder des Volumenstroms des Gasgemischs und/oder des Gehalts/der Konzentration von Komponenten des Gasgemischs, wobei die Messvorrichtung im Synthesekreislauf angeordnet ist, und wobei die Regelungsvorrichtung eingerichtet ist, auf der Grundlage der von der Messvorrichtung erfassten Messgröße das Absperrelement der ersten Umgehungsleitung und/oder das Absperrelement der zweite Umgehungsleitung zu Öffnen oder zu versperren. Als Messvorrichtung ist jede übliche und geeignete Messvorrichtung einsetzbar, welche zum Erfassen mindestens einer spezifischen Messgröße des Gasgemischs eingerichtet ist, beispielsweise Drucksensoren, Temperatursensoren oder Volumenstromsensoren, die entweder die Messgröße für das Gasgemisch im Synthesekreislauf oder den Partialdruck/die Konzentration lediglich von bestimmten Komponenten des Gasgemisch im Synthesekreislauf erfassen, beispielsweise für Wasserstoff, für Ammoniak oder für Stickstoff (sodass es sich bei entsprechenden Sensoren um stoffsensitive Messfühler/Sensoren handelt). Die Messvorrichtung ist derart im Synthesekreislauf angeordnet, dass sie den Messwert für die entsprechende Messgröße des Gasstroms des Gasgemischs im Synthesekreislauf erfasst. Die erfasste Messgröße überträgt die Messvorrichtung als Messsignal, welches diesen Messwert repräsentiert, an eine dieser Messvorrichtung zugeordnete und mit dieser zur Messwertübertragung verbundene Aufzeichnungsvorrichtung und/oder Regelungsvorrichtung (wobei eine Aufzeichnungsvorrichtung und/oder Regelungsvorrichtung auch mehreren Sensoren zugeordnet sein kann oder sogar allen Sensoren). Die Regelungsvorrichtung ist dazu eingerichtet, in Abhängigkeit von dem jeweiligen Messsignal das Absperrelement in der ersten Umgehungsleitung oder das Absperrelement in der zweiten Umgehungsleitung oder beide Absperrelement, das Absperrelement in der ersten Umgehungsleitung und das Absperrelement in der zweiten Umgehungsleitung in einem Stellvorgang zu betätigen, in welchem das jeweilige Absperrelement von dem jeweiligen Anfangszustand in einen von der Regelungsvorrichtung unter Berücksichtigung des jeweils erfassten Messwertes bestimmten Endzustand überführt und dadurch die entsprechende Umgehungsleitung weiter geöffnet oder weiter verschlossen wird, sodass sich das jeweilige Absperrelement dann in einer vollständig geöffneten Position, einer teilweise geöffneten Position (und somit auch teilweise verschlossenen Position) oder aber in einer vollständig verschlossenen Position befindet. Dabei kann sich die Messvorrichtung je nach der zu erfassenden Messgröße an einer beliebigen Position innerhalb des Synthesekreislaufs befinden, wobei es besonders vorteilhaft sein kann, wenn für den Stellvorgang mehr als ein Messwert berücksichtigt wird, beispielsweise Messwerte von zwei unterschiedlichen Messvorrichtungen, welche dieselbe Messgröße erfassen an unterschiedlichen Messpositionen des Synthesekreislaufs erfassen etwa an einer ersten Messposition zwischen der Druckseite der Fördervorrichtung und dem Einlass des Konverters und an einer zweiten Messposition zwischen dem Auslass des Konverters und der Saugseite der Fördervorrichtung (wobei die Messsignale der Regelungsvorrichtung etwa als Einzelsignale oder auch als Differenzsignale zugeführt werden können), oder Messwerte, die zu unterschiedlichen Zeitpunkten an derselben Messposition aufgenommen werden und daher eine zeitliche Streuung oder einen zeitlichen Verlauf zeigen. Messwerte mit einer zeitlichen Streuung können dann beispielsweise einer statistischen Analyse unterzogen werden (wodurch sich etwa Systemschwankungen überwachen lassen), Messwerte mit einem zeitlichen Verlauf können zum Beispiel auf einen Zielzeitpunkt in der Zukunft extrapoliert werden (wodurch sich etwa künftige Stellvorgänge vorhersagen lassen, die mit hinreichender Wahrscheinlichkeit erforderlich sein werden). Eine derartige Regelung bietet den Vorteil, bereits frühzeitig auf Änderungen im Verfahren reagieren und so die Anlage durchgängig bei einem optimalen Betriebspunkt betreiben zu können, bei welchem plötzliche Regelungen nur sehr selten erforderlich sind.

Die zuvor genannte Aufgabe wird außerdem gelöst von einem Verfahren zum Betreiben einer Ammoniaksyntheseanlage, insbesondere einer Ammoniaksyntheseanlage der vorgenannten Art, welches sich dadurch auszeichnet, dass der erste Teilstrom in einen zweiten Teilstrom und gegebenenfalls einen zweiten Reststrom aufgeteilt wird, von denen der zweite Reststrom in die Abkühlvorrichtung geführt und dort abgekühlt wird und von denen der zweite Teilstrom unter Umgehen der Abkühlvorrichtung der Saugseite der Fördervorrichtung zugeführt wird und von denen der zweite Reststrom (sofern vorhanden) in die Abkühlvorrichtung geführt, dort abgekühlt und von dort der Saugseite der Fördervorrichtung zugeführt wird.

Insgesamt handelt es sich demnach um ein Verfahren zum Betreiben einer Ammoniaksyntheseanlage, insbesondere um ein Verfahren zum Betreiben einer Ammoniaksyntheseanlage der vorgenannten Art. Beim Betrieb der Ammoniaksyntheseanlage wird ein Gasgemisch aufweisend Stickstoff, Wasserstoff und Ammoniak in einem Synthesekreislauf durch eine Fördervorrichtung mit einer Saugseite und einer Druckseite zyklisch gefördert wird. Demzufolge wird also das Gasgemisch, welches Stickstoff und Wasserstoff und Ammoniak enthält (sowie gegebenenfalls weitere Komponenten), kreisartig in einem Kreislauf gefördert, dem Synthesekreislauf.

Im regulären Betrieb werden die Edukte Stickstoff und Wasserstoff dem Synthesekreislauf zugeführt und dort in einem Konverter zumindest teilweise zu Ammoniak umgesetzt. Im regulären Betrieb wird ferner an einer Stelle des Synthesekreislaufs jeweils eine gewisse Menge des beim zyklischen Betrieb des Synthesekreislaufs erzeugten Ammoniaks als Produktgas entnommen und so aus dem Synthesekreislauf entfernt. Um die fehlende Gasmenge zu ersetzen, wird dem Synthesekreislauf dann eine entsprechende Menge an Frischgas hinzugefügt, welche zumindest die Edukte Stickstoff und Wasserstoff in einem geeigneten Mischungsverhältnis enthält. Infolge des kreislaufartigen Rückführens des Produktgasgemischs stellt sich im regulären Betrieb nach Ableiten einer Teilmenge des Ammoniaks und Ergänzen der abgeführten Gasmenge durch Frischgas beim Umsetzen des so erhaltenen ergänzten Gasgemischs im Konverter ein makroskopisch quasistationäres Gleichgewicht ein, welches so lange erhalten bleibt, wie sich der abgeführte Ammoniakstrom und der zugeführte Frischgasstrom sowie deren Temperatur und Druck nicht ändern.

Reicht die zur Verfügung stehende Menge an Eduktgas - in der Regel die verfügbare Menge an Wasserstoff - jedoch nicht aus, ist üblicherweise vorgesehen, weniger Ammoniak dem Synthesekreislauf zu entnehmen oder auf die Entnahme von Ammoniak sogar vollständig zu verzichten. Wenn weniger Ammoniak aus dem Synthesekreislauf entfernt wird, muss dem Synthesekreislauf auch weniger Frischgas neu zugeführt werden - und damit auch weniger Edukt. Wird dem Synthesekreislauf kein Ammoniak entnommen, muss dem Synthesekreislauf auch kein Frischgas zugeführt werden, der Eduktbedarf sinkt somit auf null. Dies kann insbesondere dann der Fall sein, wenn die Wasserstoffvorrichtung nicht in der Lage ist, Wasserstoff in hinreichender Menge zur Verfügung zu stellen, beispielsweise wenn die Wasserstoffvorrichtung einen Elektrolyseur aufweist, der mit elektrischer Energie betrieben wird, die aus regenerativen Energien gewonnen wird, welche einen zumindest teilweise schwankenden zeitlichen Verlauf aufweisen, zum Beispiel mit elektrischer Energie aus einer Photovoltaikanlage, aus einer Windkraftanlage oder aus einem Gezeitenkraftwerk. Bei derartigen Wasserstoffvorrichtungen kann die Wasserstoffproduktion sogar ganz zum Erliegen kommen und auf null zurückgehen, sodass es günstig ist, dem Synthesekreislauf kein Ammoniak zu entnehmen, um dem Synthesekreislauf keinen Wasserstoff zuführen zu müssen. Das Gasgemisch wird bei einem derartigen "Leerlaufbetrieb" (also bei einem Betrieb ohne Produktion entsprechend einer Teillast von 0 %) dann im Synthesekreislauf also für einige Zeit kontinuierlich im Kreislauf geführt, wobei sich ein quasistationärer dynamischer Gleichgewichtspartialdruck an Ammoniak einstellt, ohne dass sich der Nettogehalt an Ammoniak im Gasgemisch ändert. Bei einem derartigen Kreisbetrieb ist es also nicht erforderlich, die Ammoniaksyntheseanlage komplett abzuschalten und herunterzufahren (Shut-Down), vielmehr wird die Ammoniaksyntheseanlage in einem Bereitschaftsbetrieb (Stand-By) belassen, bei dem der Konverter die erforderliche Reaktionstemperatur beibehält. Dadurch ist es möglich, die Ammoniaksyntheseanlage relativ kurzfristig in einen regulären Produktionsbetrieb zu überführen, wenn die Wasserstoffvorrichtung wieder eine hinreichende Menge an Wasserstoff zur Verfügung stellen kann. Ein derartiger Bereitschaftsbetrieb wird auch als "heißer Bereitschaftsbetrieb" (Hot Stand-By) bezeichnet. Bei einem solchen heißen Bereitschaftsbetrieb soll die Anlage - und insbesondere der Konverter - möglichst wenig abkühlen. Vielmehr sollen Anlage und Konverter bei Temperaturen belassen werden, welche den jeweiligen Betriebstemperaturen im regulären Produktionsbetrieb entsprechen oder diesen zumindest nahekommen, sodass ein Übergang von einem heißen Bereitschaftsbetrieb in den Produktionsbetrieb ohne langwieriges Aufheizen möglich ist. Für einen derartigen Betrieb wird dann die Zufuhr an Edukten (Wasserstoff und Stickstoff) sowie die Entnahme von Produkt (Ammoniak) verringert oder auf null reduziert. Dadurch erfolgt keine Nettosynthese von Ammoniak (lediglich eine Synthese im dynamischen Gleichgewicht tritt auf), sodass ein Gasstrom mit einer gleichbleibenden Gleichgewichtzusammensetzung von Produkt und Edukten im Kreislauf geführt wird. Formal entspricht ein Bereitschaftsbetrieb also einem besonderen Teillastbetrieb, nämlich einem Teillastbetrieb mit einer Teillast von 0 %. Da ein derartiger Bereitschaftsbetrieb kostenintensiv ist, werden häufig Bereiche der Anlage abgeschaltet, die in einem Bereitschaftsbetrieb nicht benötigt werden (natürlich mit Ausnahme des Konverters), etwa Anlagenteile, in denen Wasserstoff und Stickstoff gewonnen wird (etwa im so genannten "Frontend" der Anlage, welches dem Synthesekreislauf als separate Baueinheit vorgelagert sein kann), aber auch Vorverdichteraggregate, welche im regulären Betrieb Eduktgase vorverdichten, bevor sie dem Synthesekreislauf zugeführt werden, bis diese den im Synthesekreislauf erforderlichen Systemdruck aufweisen (die Fördervorrichtung des Synthesekreislaufs selber bleibt auch im Bereitschaftsbetrieb stets in Betrieb, um die Zirkulation des Gasstroms im Synthesekreislauf aufrecht zu halten).

Verfahrenstechnisch lässt ein derartiger heißer Bereitschaftsbetrieb dadurch begünstigen, dass ein Teil des Gasstroms im Synthesekreislauf am Konverter vorbeigeführt wird ohne in den Konverter eingespeist zu werden, sodass sich der Aufwand auf ein Minimum beschränkt, um den Konverter auf der erwünschten Temperatur zu halten. Ein derartiger Betrieb lässt sich besonders vorteilhaft mit Hilfe der ersten Umgehungsleitung realisieren. Dazu wird das Gasgemisch in Synthesekreislaufförderrichtung stromabwärts von der Fördervorrichtung in einen ersten Teilstrom und gegebenenfalls einen ersten Reststrom aufgeteilt wird. Der erste Teilstrom wird dabei unter Umgehen des Konverters von der Druckseite der Fördervorrichtung zu der Saugseite der Fördervorrichtung rückgeführt. Auf dem Rückführungsweg wird dieser erste Teilstrom in einer Abkühlvorrichtung zumindest teilweise abgekühlt. In einem derartigen Betrieb wird typischerweise ein Teilstrom von mindestens 5 Vol.-% des gesamten Gasstroms rückgeführt, im Fall eines langfristigen heißen Bereitschaftsbetriebs kann aber auch durchaus die gesamte Menge des Gasstroms rückgeführt werden, also 100 Vol.-% des Kreislaufgases (Kreislaufgasstroms). Entsprechend wird der erste Reststrom (sofern überhaupt vorhanden) über den regulären Synthesekreislauf in den Konverter geführt.

Erfindungsgemäß wird der erste Teilstrom in einen zweiten Teilstrom und gegebenenfalls einen zweiten Reststrom aufgeteilt. Der zweite Teilstrom wird unter Umgehen der Abkühlvorrichtung der Saugseite der Fördervorrichtung zugeführt, sodass dieser zweite Teilstrom also keine Abkühlung erfährt. Dies dient dazu, sicherzustellen, dass die Temperatur des Gasgemisches bei Eintritt in die Fördervorrichtung insgesamt nicht so niedrig ist, dass in der Fördervorrichtung Ammoniak auskondensiert und dadurch die Fördervorrichtung beschädigt. Wird die Fördervorrichtung bei einer Temperatur betrieben, bei welcher an der Saugseite der Fördervorrichtung Ammoniak auskondensieren kann (oder zumindest in der Nähe einer derartigen Temperatur, sodass diese Temperatur bereits durch geringfügige Druckschwankungen unterschritten werden kann), ist es erforderlich, die Eintrittstemperatur des Gasstroms an der Fördervorrichtung zu erhöhen, um ein Auskondensieren zu vermeiden. Daher muss die Temperatur des ersten Teilstroms insgesamt erhöht werden, was sich leicht dadurch bewerkstelligen lässt, dass zumindest ein Teil des ersten Teilstroms als zweiter Teilstrom an der ab Kühlvorrichtung vorbeigeführt wird und somit nicht abgekühlt wird. Je nach der Eintrittstemperatur des Gasstromes an der Fördervorrichtung ist es dabei durchaus möglich, dass ein Teilstrom des ersten Teilstroms als zweiter Reststrom über die Abkühlvorrichtung geführt wird, solange die Eintrittstemperatur des Gasgemischs an der Fördervorrichtung nicht derartig niedrig ist, dass Ammoniak auskondensiert. Die Temperatur des Gasgemischs, welches in die Fördervorrichtung eintritt, lässt sich dabei unter Berücksichtigung des Mengenverhältnisses von erstem Teilstrom zu erstem Reststrom und der Temperatur des ersten Reststroms dadurch regeln, dass das Mengenverhältnis von zweitem Teilstrom zu zweitem Reststrom mit Hilfe von Absperrelementen geeignet eingestellt wird, sodass sich beim Zusammenführen aller Teilströme spätestens an der Druckseite der Fördervorrichtung die gewünschte Temperatur des Gasgemischs einstellt. Dabei ist es unerheblich, ob der zweite Reststrom mit dem zweiten Teilstrom vereinigt wird, bevor dieser als wiederhergestellter erster Teilstrom dem ersten Reststrom im Synthesekreislauf zugeführt wird oder ob der zweite Reststrom und der zweite Teilstrom separat in den ersten Reststrom eingespeist werden (hierbei sind grundsätzlich alle Verfahrensführungen denkbar und bieten jeweils unterschiedliche Vorteile, etwa indem zuerst der zweite Teilstrom in den ersten Reststrom eingespeist wird und stromabwärts davon der zweite Reststrom eingeleitet wird oder aber indem zuerst der zweite Reststrom in den ersten Reststrom eingespeist wird und stromabwärts davon der zweite Teilstrom eingeleitet wird).

Bei einer vorteilhaften Ausgestaltung des erfindungsgemäßen Verfahrens zum Betreiben einer Ammoniaksyntheseanlage ist insbesondere vorgesehen, dass der Wasserstoff zumindest teilweise durch Elektrolyse bereitgestellt wird, insbesondere durch Elektrolyse mit aus regenerativen Energien gewonnener elektrischen Energie. Typischerweise ist bei einer derartigen Elektrolyse das Eduktmaterial Wasser, sodass es in der Regel also eine Wasserelektrolyse ist. Für eine Wasserelektrolyse kann das Wasser dabei neutral sein, es kann aber auch Wasser mit einem pH-Wert kleiner als 7 (saure Elektrolyse) oder größer als sieben sein (basische Elektrolyse), wobei das Wasser darüber hinaus gegebenenfalls auch andere gelöste Substanzen enthalten kann, beispielsweise Salze. "Zumindest teilweise" bedeutet, dass entweder die gesamte benötigte Wasserstoffmenge oder aber nur eine Teilmenge des benötigten Wasserstoffs mittels Elektrolyse gewonnen wird während der Rest anderweitig bereitgestellt werden kann, beispielsweise über ein Wasserstoffnetzwerk oder einen Wasserstofftank. Besonders günstig ist es dabei, wenn es sich auch bei der Restmenge an Wasserstoff um "grünen" Wasserstoff handelt, also um Wasserstoff, welcher nachhaltig hergestellt wurde, sodass insbesondere für dessen Herstellung kein zusätzliches Kohlendioxid in die Atmosphäre freigesetzt wird. Bevorzugt handelt es sich dabei um Wasserstoff, der in einem Verfahren hergestellt wurde, bei dem der Energiebedarf zur Herstellung aus erneuerbaren/regenerativen Energien gedeckt wird. Eine derartige Verfahrensführung ermöglicht vor allem eine besonders klimaneutrale und umweltfreundliche Produktion von Ammoniak.

Bei einer vorteilhaften Ausgestaltung des erfindungsgemäßen Verfahrens zum Betreiben einer Ammoniaksyntheseanlage ist insbesondere vorgesehen, dass das Gasgemisch an der Saugseite der Fördervorrichtung einen Volumenstrom aufweist, der einen minimalen Wert von 50 % des maximalen Volumenstroms der Fördervorrichtung nicht unterschreitet und bevorzugt einen Volumenstrom von mindestens 85 % und höchstens 105 % des maximalen Volumenstromstroms der Fördervorrichtung aufweist. Dabei kann insbesondere vorgesehen sein, dass das Verhältnis von erstem Teilstrom zu erstem Reststrom sowie das Verhältnis von zweiten Teilstrom zu zweitem Reststrom derart geregelt wird, dass das Gasgemisch an der Saugseite der Fördervorrichtung einen Volumenstrom von minimal 85 % des maximalen Volumenstroms der Fördervorrichtung aufweist. Ein minimaler saugseitiger Volumenstrom des Kreislaufgases an der Fördervorrichtung von 50 %, insbesondere von 85 %, gewährleistet einen sicheren Betrieb der Anlage ohne Pumpen ("Surge"). Gleichzeitig sollte dieser Wert möglichst dicht am maximalen Volumenstrom der Fördervorrichtung liegen, um die Energie zum Antrieb der Fördervorrichtung möglichst effizient nutzen zu können (welche vorteilhafterweise ebenfalls mit Hilfe von regenerativer Energie gewonnen wird). Insbesondere sollte der saugseitige Volumenstrom aus Gründen der Anlagensicherheit einen Wert von 105 % nicht überschreiten. Auf diese Weise lässt sich ein stabiler und ressourcenschonender Betrieb besonders einfach realisieren.

Bei einer vorteilhaften Ausgestaltung des erfindungsgemäßen Verfahrens zum Betreiben einer Ammoniaksyntheseanlage ist insbesondere vorgesehen, dass die Fördervorrichtung ein Zentrifugalkompressor ist, die Drehzahl des Zentrifugalkompressors auf einen vorgegebenen Wert geregelt wird und das Gasgemisch an der Saugseite der Fördervorrichtung einen Volumenstrom aufweist, der einen minimalen Wert von 50 % des maximalen Volumenstroms der Fördervorrichtung nicht unterschreitet, bevorzugt einen Volumenstrom von mindestens 70 % und höchstens 105 % des maximalen Volumenstroms der Fördervorrichtung aufweist. Auf diese Weise lässt sich das Verfahren apparativ besonders energieeffizient realisieren.

Bei einer vorteilhaften Ausgestaltung des erfindungsgemäßen Verfahrens zum Betreiben einer Ammoniaksyntheseanlage ist insbesondere vorgesehen, dass unter Anlagenvolllast das Gasgemisch an der Druckseite der Fördervorrichtung eine Temperatur von mindestens 15 °C und höchstens 60 °C aufweist und/oder unter Anlagenteillast eine Temperatur von mindestens 15 °C und maximal 180 °C aufweist, insbesondere bei einer Anlagenteillast nahe 0 % (also von maximal 10 % der Anlagenvolllast) von mindestens 150 °C und maximal 180 °C. Insbesondere kann dabei vorgesehen sein, dass das Verhältnis von zweitem Teilstrom zu zweitem Reststrom derart geregelt wird, dass das Gasgemisch an der Druckseite der Fördervorrichtung eine Temperatur von mindestens 30 °C und maximal 170 °C aufweist. Mit einer entsprechenden druckseitigen Maximaltemperatur wird bei einem "heißen Bereitschaftsbetrieb" - unter Berücksichtigung einer Sicherheitsreserve - zum einen ein sicherer Anlagenbetrieb, gleichzeitig aber auch ein möglichst ressourcenschonender Betrieb gewährleistet, bei dem das Kreislaufgas um nur Weniges über etwaige nachgelagerte Heizvorrichtungen erwärmt werden muss. Mit der Mindesttemperatur wird sichergestellt, dass auch bei niedrigen Anlagenteillasten eine Ammoniakkondensation innerhalb der Fördervorrichtung (und damit ein vorzeitiger Verschleiß oder eine etwaige anderweitige nutzungsbedingte Beschädigung der Fördervorrichtung) vermindert oder sogar vermieden wird.

So lässt sich das erfindungsgemäße Verfahren etwa realisieren, indem von der Regelungsvorrichtung der Durchfluss durch die erste Umgehungsleitung so weit freigegeben wird, dass der erste Reststrom als Kreislaufstrom durch den übrigen Synthesekreislauf und somit durch den Konverter mindestens einem Minimalstrom entspricht, der zur Aufrechterhaltung von Druck, Temperatur und Gasstromzusammensetzung des beabsichtigten Betriebs (eines Produktionsbetriebs unter Volllast, einem eingeschränkten Produktionsbetrieb unter Teillast oder einem reinen "heißen" Bereitschaftsbetrieb) erforderlich ist. Dabei lassen sich für jede Teillast die Teilströme, die als erster Teilstrom durch die erste Umgehungsleitung und gegebenenfalls als zweiter Teilstrom durch die zweite Umgehungsleitung hindurchgeleitet werden, wie auch der zweite Reststrom so einstellen, dass einerseits der Volumenstrom an der Saugseite der Fördervorrichtung insgesamt nah am minimalen Wert liegt (wodurch die Antriebsenergie minimiert wird), andererseits aber auch, dass die Austrittstemperatur bei einem "heißen Bereitschaftsbetrieb" an der Druckseite der Fördervorrichtung nahe an einer maximalen Temperatur von 170 °C liegt (welche nicht überschritten werden soll). Auf diese Weise lässt sich der Stromverbrauch bei einem etwaigen Aufheizen des Kreislaufgases stromabwärts von der Fördervorrichtung minimieren, mit welchem eine etwaige Wärmeabfuhr aus dem Synthesekreislauf kompensiert werden soll.

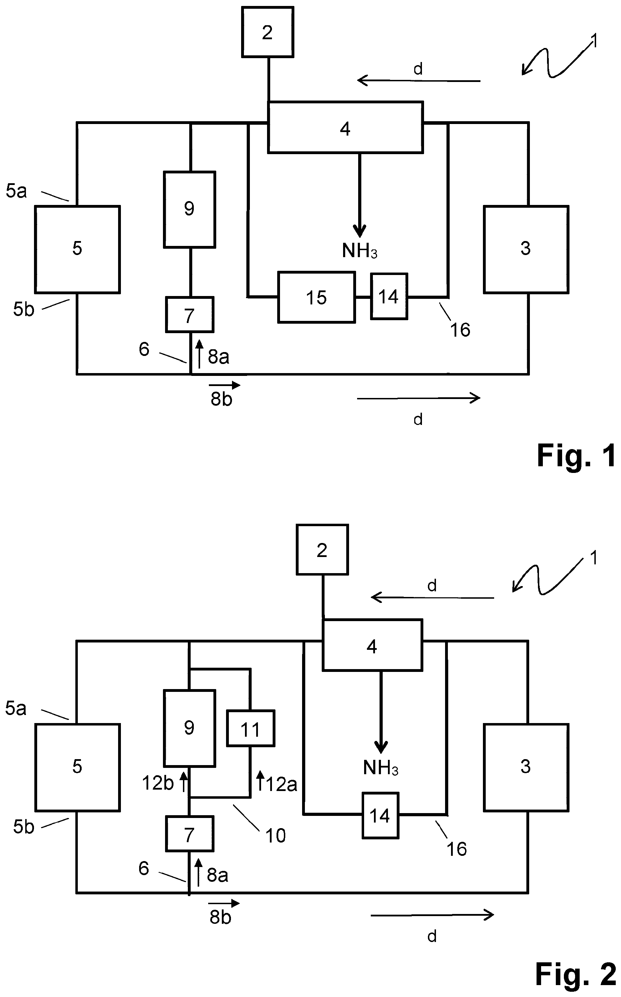

Im Einzelnen gibt es eine Vielzahl von Möglichkeiten, die erfindungsgemäße Anlage und das erfindungsgemäße Verfahren auszugestalten und weiterzubilden. Dazu wird verwiesen sowohl auf die den Patentansprüchen 1 und 8 nachgeordneten Patentansprüche, als auch auf die nachfolgende Beschreibung bevorzugter Ausführungsbeispiele in Verbindung mit den Zeichnungen, mit Hilfe welcher die Erfindung nachfolgend näher erläutert wird. Es zeigen jeweils schematisch Fig. 1 eine schematische Darstellung eines Teiles einer herkömmlichen Anlage zur Herstellung von "grünem Ammoniak" mit einer kühlbaren Umgehungsleitung zum absperrbaren Rückführen eines Teilstroms des Gasgemischs von der Druckseite der Fördervorrichtung zu der Saugseite der Fördervorrichtung,
Fig. 2 eine schematische Darstellung einer ersten Ausführungsform eines Teiles einer erfindungsgemäßen Anlage zur Herstellung von Ammoniak,
Fig. 3 eine schematische Darstellung einer zweiten Ausführungsform eines Teiles einer erfindungsgemäßen Anlage zur Herstellung von Ammoniak und
Fig. 4 eine schematische Darstellung einer dritten Ausführungsform eines Teiles einer erfindungsgemäßen Anlage zur Herstellung von Ammoniak.

Fig. 1 zeigt eine schematische Darstellung eines Teiles einer herkömmlichen Anlage 1 zur Herstellung von Ammoniak mit einer kühlbaren Umgehungsleitung 6 zum absperrbaren Rückführen eines Teilstroms 8a des Gasgemischs von der Druckseite 5b der Fördervorrichtung 5 zu der Saugseite 5a der Fördervorrichtung 5.

Die Ammoniaksyntheseanlage 1 weist einen Synthesekreislauf auf, in welchen Wasserstoff und Stickstoff als Edukte eingespeist werden. Die Richtung, in welcher das Gasgemisch mit Hilfe einer Fördervorrichtung 5 im Synthesekreislauf im Kreislauf geführt wird, ist durch einen Pfeil als Synthesekreislaufförderrichtung d dargestellt. Der eigentliche Synthesekreislauf führt im vorliegenden Fall durch den Konverter 3, die Ammoniakentnahmevorrichtung 4 und die Fördervorrichtung 5 (sowie durch die dazwischen angeordneten Rohrleitungen nebst weiteren funktionalen Elementen, wie beispielsweise Kühlern oder Wärmetauschern, welche in Fig. 1 nicht dargestellt sind).

Demzufolge befindet sich also im Synthesekreislauf der Konverter 3, in welchem Wasserstoff und Stickstoff an einem Katalysator in einer Gleichgewichtsreaktion zu Ammoniak reagieren. Da die Reaktion im Reaktor unter Gleichgewichtsbedingungen stattfindet, wird dem Gasgemisch, das im Synthesekreislauf zirkuliert, im Produktionsbetrieb durch eine Ammoniakentnahmevorrichtung 4 Ammoniak als mehr oder weniger reiner Produktstrom entzogen (Pfeil "NH₃" in Fig. 1) und durch eine entsprechende Menge an Frischgas ersetzt, welches Stickstoff und Wasserstoff enthält. Wasserstoff wird dem Synthesekreislauf durch die Wasserstoffvorrichtung 2 zugeführt, welche mit der Ausgangsseite der Ammoniakentnahmevorrichtung 4 stoffführend verbunden ist (sodass also der Wasserstoff an dieser Stelle in den Synthesekreislauf eingebracht wird). Die Fördervorrichtung 5 (in der Regel ein Turbokompressor) weist dabei eine Saugseite 5a und eine Druckseite 5b auf. Über die Saugseite 5a wird der innerhalb des Synthesekreislaufs im Kreis zu führende Gasstrom in die Fördervorrichtung 5 angesaugt, über die Druckseite 5b wird der der innerhalb des Synthesekreislaufs im Kreis zu führende Gasstrom aus der Fördervorrichtung 5 ausgestoßen, wodurch der Gasstrom insgesamt in Synthesekreislaufförderrichtung d gefördert wird.

Der bereits bekannte Synthesekreislauf weist dabei zwei Umgehungsleitungen auf: Mit einer Umgehungsleitung 16 wird die Ammoniakentnahmevorrichtung 4 überbrückt, die andere Umgehungsleitung 6 führt von der Druckseite 5b des Kompressors 5 zu der Saugseite 5a des Kompressors 5.

Die zusätzliche Umgehungsleitung 16 zum Umgehen der Ammoniakentnahmevorrichtung 4 weist ein Absperrelement 14 und eine Abkühlvorrichtung 15 auf und dient dazu, bei einem Teillastbetrieb einen Teil des Kreislaufgasstroms an der Ammoniakentnahmevorrichtung 4 vorbeizuführen. Wird für einen Teillastbetrieb das Absperrelement 14 ganz oder teilweise geöffnet, so umgeht ein Teil des Kreislaufgasstroms die Ammoniakentnahmevorrichtung 4, weshalb dem Kreislaufgas weniger Ammoniak entnommen wird. Im dynamischen Gleichgewicht eines solchen Teillastbetriebs wird im Konverter 3 demzufolge weniger Ammoniak synthetisiert, weshalb der Bedarf an Eduktgasen geringer ist. Daher kann diese zusätzliche Umgehungsleitung 16 dazu dienen, einen Teillastbetrieb zu stabilisieren. Der Teilstrom, der durch die zusätzliche Umgehungsleitung 16 an der meist zumindest teilweise kryogen betriebenen Ammoniakentnahmevorrichtung 4 vorbeigeführt wird, wird mit Hilfe der Abkühlvorrichtung 15 abgekühlt, sodass der in die Fördervorrichtung 5 eingeleitete Gasstrom eine hinreichend niedrige Temperatur aufweist.

Die Umgehungsleitung 6 von der Druckseite 5b der Fördervorrichtung 5 zur Saugseite 5a der Fördervorrichtung 5 dient ebenfalls dazu, einen Teillastbetrieb zu stabilisieren. Dazu umgeht zumindest ein Teil des Kreislaufgasstroms den Konverter 3 und die Ammoniakentnahmevorrichtung 4 und wird vom Ausgang der Fördervorrichtung 5 wieder zum Eingang der Fördervorrichtung 5 direkt zurückgeführt; auch diese Umgehungsleitung 6 weist ein Absperrelement 7 und eine Abkühlvorrichtung 9 auf. Um einen Teil des Kreislaufgasstroms durch diese Umgehungsleitung 6 zurückzuführen wird das Absperrelement 7 zumindest teilweise geöffnet, wodurch ein Teil des Gasstroms durch diese Umgehungsleitung 6 fließen kann. Dabei wird der Gasstrom auf der Druckseite 5b der Fördervorrichtung 5 in einen Teilstrom 8a und einen Reststrom 8b aufgeteilt. Der Reststrom 8b wird den Konverter 3 zugeleitet und gelangt danach - zumindest anteilig - in die Ammoniakentnahmevorrichtung 4 während der Teilstrom 8a direkt zur Saugseite 5a des Kompressors 5 geleitet wird. Um zu verhindern, dass der Gasstrom, welcher in wiederholten Durchläufen durch die Fördervorrichtung 5 mehrfach hintereinander komprimiert wird, zu einer Erhöhung der Temperatur des Gasstroms in der Fördervorrichtung 5 führt, wird dieser erste Teilstrom 8a durch die Abkühlvorrichtung 9 geleitet.

Fig. 2 zeigt eine schematische Darstellung einer ersten Ausgestaltung eines Teiles einer erfindungsgemäßen Anlage zur Herstellung von Ammoniak. Die erste Ausgestaltung unterscheidet sich von der in Fig. 1 dargestellten herkömmlichen Anlage vor allem dadurch, dass die in Fig. 2 dargestellte Ammoniaksyntheseanlage 1 als Teil der ersten Umgehungsleitung 6 eine zweite Umgehungsleitung 10 aufweist, welche die Abkühlvorrichtung 9 überbrückt. Ein weiterer Unterschied besteht darin, dass die in Fig. 2 dargestellte Ammoniaksyntheseanlage in der zusätzlichen Umgehungsleitung 16 für die Ammoniakentnahmevorrichtung 4 keine Abkühlvorrichtung aufweist. Von diesen Unterschieden abgesehen sind die Elemente der in Fig. 2 dargestellten ersten Ausgestaltung im Wesentlichen identisch zu der in Fig. 1 dargestellten herkömmlichen Anlage (identische Bezugszeichen beschreiben jeweils entsprechende Komponenten).

Auch die Ammoniaksyntheseanlage 1 gemäß der ersten Ausgestaltung weist einen Synthesekreislauf mit einem Konverter 3, einer Ammoniakentnahmevorrichtung 4 und einer Fördervorrichtung 5 sowie Rohrleitungen auf. Darüber hinaus kann der Synthesekreislauf weitere funktionale Elemente enthalten wie beispielsweise Rohrabzweigungen, Ventile, Messvorrichtungen zur Überwachung von Verfahrensparametern, Heizvorrichtungen (insbesondere elektrische Heizvorrichtungen) Gas-Gas-Wärmetauscher (insbesondere um einen Teil der Wärmeenergie des Gasgemischs aus dem Konverter 3 zum Vorwärmen des Gasgemischs zu verwenden, welches dem Konverter 3 zugeleitet wird) sowie Abhitzedampferzeuger oder Dampfüberhitzer (um die bei der Reaktion entstehende Wärmeenergie abzuführen und anderweitig zu nutzen; diese sind in Fig. 2 nicht dargestellt.

In den Synthesekreislauf werden Wasserstoff und Stickstoff als Edukte im Verhältnis zu der Menge an Ammoniak eingespeist, die dem Synthesekreislauf über die Ammoniakentnahmevorrichtung 4 entnommen wird. Das Edukt Wasserstoff wird durch eine Wasserstoffvorrichtung 2 in den Synthesekreislauf eingebracht. Im vorliegenden Fall ist die Wasserstoffvorrichtung 2 ein Elektrolyseur zur Wasserelektrolyse, der mit elektrischer Energie (Strom) betrieben wird, welcher aus regenerativer Energie erzeugt (umgewandelt) wird, im vorliegenden Fall in einer Photovoltaikanlage. Stattdessen können aber auch andere Wasserstoffvorrichtungen 2 zum Einsatz kommen, beispielsweise Anlagen zur Elektrolyse von anderen Rohstoffen als Wasser, zur Pyrolyse, zur Gewinnung aus Biomasse und dergleichen. Wasserstoffvorrichtungen 2 können allerdings auch Vorrichtungen zum Zuführen von Wasserstoff sein, der nicht unmittelbar bei der Ammoniaksyntheseanlage 1 erzeugt wird, beispielsweise Wasserstoffpipelines, über welche die Ammoniaksyntheseanlage 1 an ein Wasserstoffversorgungsnetzwerk angeschlossen ist, Synthesegaspipelines, Wasserstofftanks und dergleichen. Bevorzugt werden als Wasserstoffvorrichtungen 2 solche eingesetzt, in denen der Wasserstoff unter Einsatz von regenerativen Energien gewonnen wird, insbesondere mittels Windenergieanlagen, Sonnenenergieanlagen, Anlagen zur Nutzung von Wasserkraft und/oder Gezeitenkraft, Bioenergieanlagen, Geothermieanlagen oder auch Kombinationen solcher Anlagen im Rahmen eines Anlagenverbunds, durch welchen sich die Verfügbarkeit elektrischer Energie erhöhen lässt. Grundsätzlich lassen sich aber auch herkömmliche Systeme zur Wasserstoffgewinnung einsetzen (etwa Reaktoren zur Kohlevergasung, zum Dampfreformieren, zum autothermen Reformieren, zur partiellen Oxidation und dergleichen), allerdings lässt sich mit diesen kein "grüner Wasserstoff" erzeugen (und somit auch kein "grüner Ammoniak"), sondern lediglich "grauer Wasserstoff". Die Einspeisung von Wasserstoff in den Synthesekreislauf erfolgt üblicherweise in den Teil des Synthesekreislaufs, welcher in Synthesekreislaufförderrichtung d stromabwärts der Ammoniakentnahmevorrichtung 4 und stromaufwärts des Eingangs des Konverters 3 angeordnet ist, im vorliegenden Beispiel an der Ausgangsseite des Kreislaufgasstroms aus der Ammoniakentnahmevorrichtung 4.

Das Edukt Stickstoff wird in den Synthesekreislauf über eine entsprechende Stickstoffvorrichtung eingebracht (nicht dargestellt), in welcher Stickstoff typischerweise aus der Luft erhalten wird, etwa in einer chemischen oder kryogenen Aufbereitung von Luft (beispielsweise mittels fraktionierter kryogener Auftrennung im Rahmen einer Tieftemperaturluftzerlegung) oder durch selektive Adsorption (beispielsweise im Rahmen einer Druckwechsel-Adsorption). Die Einspeisung von Stickstoff in den Synthesekreislauf kann von der Einspeisung des Wasserstoffs getrennt oder aber über eine gemeinsame Rohrleitung erfolgen.

Das im Synthesekreislauf zirkulierende Gasgemisch, welches neben den Eduktgasen Wasserstoff und Stickstoff auch das Produktgas Ammoniak sowie gegebenenfalls weitere (gasförmige) Bestandteile enthält (beispielsweise Argon, etwa aus der Luft, Methan, etwa aus einer Methanisierung, oder andere Verbindungen in Kleinstmengen, beispielsweise als Verunreinigungen), wird von der Fördervorrichtung 5 kreisartig zirkulierend im Synthesekreislauf gefördert und dann - gegebenenfalls über Abkühlstrecken oder Erwärmungsstrecken - dem Konverter 3 zugeführt. Im Konverter 3 reagieren Wasserstoff und Stickstoff an einem Katalysator in einer Gleichgewichtsreaktion zu Ammoniak. Im vorliegenden Fall ist der Konverter 3 ein dreistufiger Haber-Bosch-Reaktor, also ein Reaktor, der drei Stufen aufweist, wobei der Gasstrom in jeder Katalysatorstufe ein Katalysatorbett mit einem Katalysator auf Eisenbasis sowie einen Wärmetauscher durchströmt. Grundsätzlich kann der Konverter 3 ein beliebig ausgestalteter einstufiger oder mehrstufiger Reaktor sein, in welchem der entsprechende Katalysator angeordnet ist (nicht dargestellt). Als Konverter 3 können auch mehrere, miteinander mehrstufig in Reihe oder parallel verschaltete, einzelne Reaktoren dienen. Der Konverter 3 kann ein Reaktor für jedes zur Herstellung von Ammoniak aus gasförmigen Edukten geeignete Verfahren sein, insbesondere ein Reaktor für das Haber-Bosch-Verfahren (etwa unter Verwendung von Katalysatorsystemen auf Eisenbasis, auf Rutheniumbasis, auf Osmiumbasis oder dergleichen, gegebenenfalls mit Promotoren, Trägern und entsprechenden anderen Hilfsstoffen), aber auch ein Reaktor für eine elektrochemische Synthese oder für andere Verfahren.

Da die Reaktion im Konverter 3 unter Gleichgewichtsbedingungen stattfindet, wird im Produktionsbetrieb aus dem Synthesekreislauf Ammoniak mittels einer Ammoniakentnahmevorrichtung 4 abgezweigt (Pfeil "NH₃" in Fig. 2) und einer weiteren Aufarbeitung, Speicherung oder Nutzung zugeleitet. Im vorliegenden Fall ermöglicht die Ammoniakentnahmevorrichtung 4 eine kryogene Ammoniakabtrennung, in welcher das Kreislaufgas so stark abgekühlt wird, dass Ammoniak auskondensiert und in flüssiger Form aus dem Gasstrom abgetrennt werden kann, jedoch sind grundsätzlich auch andere Möglichkeiten der Ammoniakabtrennung möglich, beispielsweise mittels Druckwechsel-Adsorption und dergleichen. In der in Fig. 2 dargestellten Anlage ist die Ammoniakentnahmevorrichtung 4 stromabwärts vom Konverter 3 und stromaufwärts von der Fördervorrichtung 5 angeordnet, jedoch sind grundsätzlich auch andere Anordnungen möglich.

Zur Überbrückung der Ammoniakentnahmevorrichtung 4 ist auch in der ersten Ausführungsform der vorliegenden Erfindung eine zusätzliche Umgehungsleitung 16 vorgesehen, die ein Absperrelement 14 aufweist, diese dient dazu, bei einem Teillastbetrieb einen Teil des Kreislaufgasstroms an der Ammoniakentnahmevorrichtung 4 vorbeizuführen. Wird für einen Teillastbetrieb das Absperrelement 14 ganz oder teilweise geöffnet, so umgeht zumindest ein Teil des Kreislaufgasstroms die Ammoniakentnahmevorrichtung 4, weshalb dem Kreislaufgas weniger Ammoniak entnommen wird. Im dynamischen Gleichgewicht eines solchen Teillastbetriebs wird im Konverter 3 demzufolge weniger Ammoniak synthetisiert, weshalb der Bedarf an Eduktgasen geringer ist. Daher kann diese zusätzliche Umgehungsleitung 16 dazu dienen, einen Teillastbetrieb mit einer kryogenen Ammoniakentnahmevorrichtung 4 zu stabilisieren (diese zusätzliche Umgehungsleitung 16 könnte auch weggelassen werden, jedoch hätte dies einen erheblich weniger stabilen Teillastbetrieb zur Folge; unter bestimmten Umständen kann ein jedoch auch eine Anlage ohne eine derartige zusätzliche Umgehungsleitung 16 Vorteile mit sich bringen). Eine zusätzliche Abkühlung des Teilstroms, der durch die zusätzliche Umgehungsleitung 16 an der Ammoniakentnahmevorrichtung 4 vorbeigeführt wird, ist nicht erforderlich, da die Kombination aus erster Umgehungsleitung 6, zweiter Umgehungsleitung 12, Abkühlvorrichtung 9 und den beiden Absperrelementen 7 und 11 eine definierte Abkühlung des Gasstroms erlaubt, sodass der in die Fördervorrichtung 5 eingeleitete Gasstrom eine hinreichend niedrige Temperatur aufweist.

Als Fördervorrichtung 5 (Kompressor) kommt in der ersten Ausgestaltung ein Turbozentrifugalkompressor (Turbokompressor) zum Einsatz, jedoch sind auch andere Arten an Kompressoren grundsätzlich möglich. Die Fördervorrichtung 5 weist eine Saugseite 5a und eine Druckseite 5b auf; über die Saugseite 5a wird der im Synthesekreislauf zirkulierende Gasstrom in die Fördervorrichtung 5 angesaugt, über die Druckseite 5b wird der im Synthesekreislauf zirkulierende Gasstrom aus der Fördervorrichtung 5 ausgestoßen, wodurch der Gasstrom insgesamt in Synthesekreislaufförderrichtung d gefördert wird. In der vorliegenden Anordnung ist die Fördervorrichtung 5 stromabwärts von der Ammoniakentnahmevorrichtung 4 und stromaufwärts von dem Konverter 3 positioniert.

Die Ammoniaksyntheseanlage 1 weist eine erste Umgehungsleitung 6 auf, welche von der Druckseite 5b des Kompressors 5 zur Saugseite 5a des Kompressors 5 führt. Teil der ersten Umgehungsleitung 6 ist ein Absperrelement 7 sowie eine Abkühlvorrichtung 9. Im vorliegenden Fall ist das Absperrelement 7 ein Dosierventil, welches in eine vollständig geschlossene Stellung, eine vollständig geöffnete Stellung oder eine teilweise geöffnete Stellung gebracht werden kann. Ist das Absperrelement 7 (vollständig oder teilweise) geöffnet, wird der Kreislaufgasstrom, welcher an der Druckseite 5b die Fördervorrichtung 5 verlässt, in zwei Teilströme aufgeteilt, den ersten Teilstrom 8a und den ersten Reststrom 8b. Der erste Reststrom 8b wird dem Konverter 3 zugeleitet während der erste Teilstrom 8a durch die erste Umgehungsleitung 6 geführt wird. Infolge der Verwendung eines Turbozentrifugalkompressors lässt sich die dort im Rahmen der Pumpgrenzregelungsanordnung bereits vorgesehene Umblaseleitung als erste Umgehungsleitung 6 einsetzen, sodass das Umblaseventil der Umblaseleitung als Absperrelement 7 und der Umblasekühler der Umblaseleitung als Abkühlvorrichtung 9 dient, sodass sich herkömmliche Fördervorrichtungen also mit einfachen Maßnahmen an die speziellen Erfordernisse anpassen lassen.

Die erste Umgehungsleitung 6 weist die zweite Umgehungsleitung 10 auf, mit welcher die Abkühlvorrichtung 9 der ersten Umgehungsleitung 6 umgangen wird. Die zweite Umgehungsleitung 10 weist ein Absperrelement 11 auf, bei welchem es sich vorliegend ebenfalls um ein Dosierventil handelt. Auch dieses Dosierventil kann in eine vollständig geschlossene Stellung, eine teilweise geöffnete Stellung oder eine vollständig geöffnete Stellung gebracht werden. Ist das Absperrelement 11 (vollständig oder teilweise) geöffnet, wird der erste Teilstrom 8a, welcher durch die erste Umgehungsleitung 6 geführt wird, in zwei Teilströme aufgeteilt, den zweiten Teilstrom 12a und den zweiten Reststrom 12b. Der zweite Reststrom 12b wird durch die Abkühlvorrichtung 9 hindurchgeleitet während der zweite Teilstrom 12a durch die zweite Umgehungsleitung 10 geführt wird. Im vorliegenden Fall werden der zweite Teilstrom 12a und der zweite Reststrom 12b hinter der Abkühlvorrichtung 9 wieder zusammengeführt und über eine gemeinsame Leitung in den Teil des Kreislaufgasstroms eingespeist, welcher durch den Konverter 3 geleitet wurde. Abweichend sind jedoch auch andere Ausgestaltungen möglich; so können beispielsweise der zweite Teilstrom 12a und der zweite Reststrom 12b getrennt dem aus dem Konverter 3 kommenden ersten Reststrom 8b oder sogar voneinander beabstandet an unterschiedlichen Stellen zugeführt werden, bevor der vereinigte Gasstrom die Saugseite 5a der Fördervorrichtung 5 erreicht.

Mit Hilfe der zweiten Umgehungsleitung 10 ist es möglich, einen Teilstrom des ersten Teilstroms 8a (nämlich den zweiten Teilstrom 12a) an der Abkühlvorrichtung 9 vorbei zu führen, sodass dieser zweite Teilstrom 12a nicht gekühlt wird während der zweite Reststrom 12b gekühlt wird. Je nach der Einstellung des Absperrelements 11 lässt sich dabei das Verhältnis vom gekühlten zweiten Reststrom 12b zu ungekühltem zweiten Teilstrom 12a festlegen - und somit die Temperatur, mit welcher der erste Teilstrom 8a mit dem ersten Reststrom 8b wieder zusammengeführt wird, nachdem letzterer den Konverter 3 durchlaufen hat. Auf diese Weise lässt sich die Eintrittstemperatur des zirkulierenden Gasstroms genau einstellen, welcher der Fördervorrichtung 5 an deren Saugseite 5a zugeführt wird. Durch die Wahl einer hinreichend hohen Temperatur kann verhindert werden, dass bei den jeweiligen Druckverhältnissen und Partialdruckverhältnissen im Kreislaufgasstrom Ammoniak innerhalb der Fördervorrichtung 5 auskondensiert und diese beschädigt. Gleichzeitig kann mit Hilfe der zweiten Umgehungsleitung 10 und insbesondere der Einstellung von deren Absperrelement 11 sichergestellt werden, dass die Temperatur des in die Fördervorrichtung 5 eintretenden Gasstroms einerseits möglichst hoch ist (so das ein erneutes Erwärmen des Gasstroms vor Eintritt in den Konverter 3 minimiert wird), gleichzeitig aber die für die jeweilige Fördervorrichtung 5 spezifizierte maximale Austrittstemperatur nicht überschritten wird (bei Turbozentrifugalkompressoren ist typischerweise eine maximale Austrittstemperatur von etwa 200 °C spezifiziert), sodass sich herkömmliche Kompressoren als Fördervorrichtung 5 verwenden lassen.

Demzufolge ermöglicht die Verwendung einer zweiten Umgehungsleitung 10 innerhalb der ersten Umgehungsleitung 6 zum Umgehen der Abkühlvorrichtung 9 eine exakte Steuerung der Temperatur des in den die Fördervorrichtung 5 eintretenden Gasstroms selbst bei einem Teillastbetrieb, welche bislang nur mit komplizierten und energieintensiven Maßnahmen möglich war.

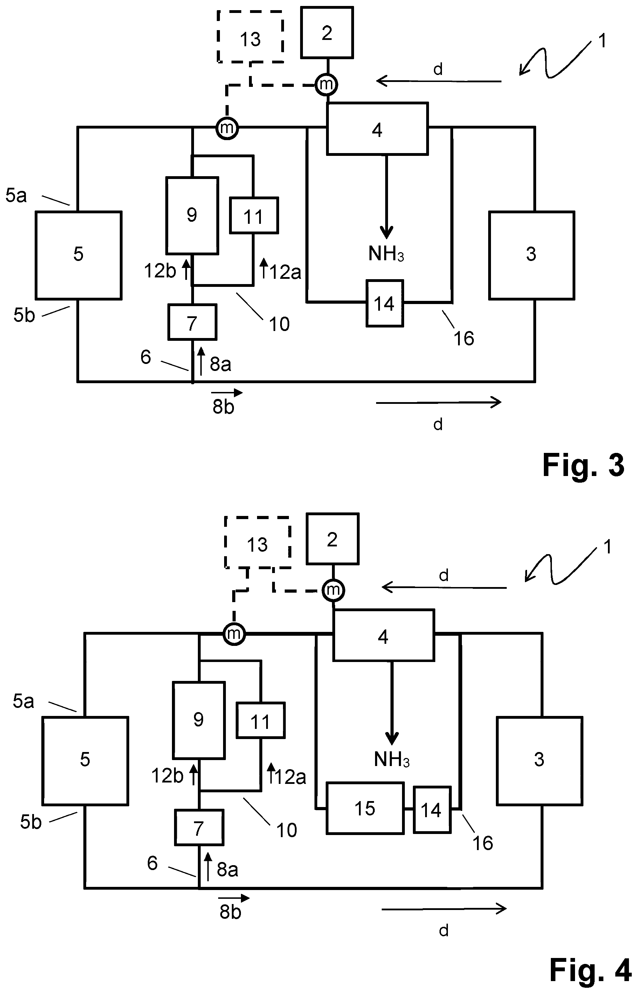

Fig. 3 zeigt eine schematische Darstellung einer zweiten Ausgestaltung eines Teiles einer erfindungsgemäßen Anlage zur Herstellung von Ammoniak. Die zweite Ausgestaltung unterscheidet sich von der in Fig. 2 dargestellten ersten Ausgestaltung dahingehend, dass die in Fig. 3 dargestellte Ammoniaksyntheseanlage 1 eine Regelungsvorrichtung 13 sowie mit dieser verbundene Messvorrichtungen m aufweist (automatisch oder nicht automatisch, während bei der zweiten Ausgestaltung keine automatische Regelung über eine Regelungsvorrichtung vorgesehen ist). Die Regelungsvorrichtung 13 ist über eine gemeinsame Signalleitung oder über verschiedene Signalleitungen mit den Messvorrichtungen m verbunden (im vorliegenden Fall sind exemplarisch zwei Messvorrichtungen m dargestellt, wobei diese grundsätzlich an unterschiedlichen Stellen angeordnet sein können oder auch an derselben Stelle - etwa in Form eines Mehrfachsensors -, es kann aber auch nur eine Messvorrichtung m oder es können auch mehr als zwei Messvorrichtungen m vorgesehen sein). Die Regelungsvorrichtung 13 erfasst die Signale von den Messvorrichtungen m, wertet diese aus und betätigt die Absperrelemente 7 und 11 entsprechend, um sicherzustellen, dass der Volumenstrom des Kreislaufgases durch die Fördervorrichtung 5 hinreichend hoch ist, gleichzeitig aber die Eingangstemperatur des Kreislaufgasstroms auf der Saugseite 5a der Fördervorrichtung 5 in einem geeigneten Temperaturintervall liegt. Die Eingangstemperatur des Kreislaufgasstroms soll also hinreichend hoch sein, um ein Kondensieren von Ammoniak vor oder innerhalb der Fördervorrichtung 5 zu vermeiden. Andererseits soll die Eingangstemperatur des Kreislaufgasstroms hinreichend niedrig sein, um einen Betrieb der Fördervorrichtung 5 innerhalb des für die Fördervorrichtung 5 als noch zulässig spezifizierten Temperaturbereichs sicherzustellen. Für den heißen Bereitschaftsbetrieb ist es darüber hinaus besonders vorteilhaft, die Temperatur an der Saugseite 5a der Fördervorrichtung 5 so hoch wie möglich zu halten (möglichst bei etwa 170 °C), damit das Gasgemisch vor dem Einleiten in den Konverter 3 möglichst wenig wiedererhitzt werden muss. Dies ist durch Einsatz der erfindungsgemäßen Verschaltung der Anlagenkomponenten und deren Betrieb möglich.

In die Regelungsentscheidung der Regelungsvorrichtung 13 können auch weitere Aspekte einfließen, beispielsweise die Zusammensetzung des Kreislaufgases. Demzufolge sind die Messvorrichtungen m jeweils zum Erfassen mindestens einer Messgröße des Gasgemischs eingerichtet, wobei typischerweise die Temperatur des Gasgemischs erfasst wird, gegebenenfalls auch dessen Druck, Zusammensetzung oder Volumenstrom. Gegebenenfalls können stattdessen oder zusätzlich auch der Partialdruck/die Konzentration einzelner Komponenten des Gasgemischs und dergleichen erfasst und ausgewertet werden. Auf der Grundlage der von den Messvorrichtungen m erfassten Messgrößen veranlasst die Regelungsvorrichtung 13 das Absperrelement 7 der ersten Umgehungsleitung 6 und/oder das Absperrelement 11 der zweiten Umgehungsleitung 10 zum vollständigen oder teilweisen Öffnen oder Sperren (und gegebenenfalls auch des Absperrelements 14). Die Regelungsentscheidung, welche von der Regelungsvorrichtung 13 getroffen wird, beruht auf vorher festgelegten Regeln, in welchen der an der jeweiligen Messvorrichtung m ermittelte Messwert berücksichtigt wird; die Regeln können beispielsweise Maßnahmen vorsehen, welche bei Überschreiten oder Unterschreiten bestimmter festgelegter Grenzwerte durch einen einzelnen Messwert oder durch mehrere Messwerte einzuleiten sind, aber auch Maßnahmen, welche sich aus einem Vergleich eines Messwert mit anderen Messwerten ergeben, beispielsweise aus dem Vergleich von Messwerten, die an unterschiedlichen Messvorrichtungen m erfasst werden oder aber dem zeitlichen Verlauf eines an einer Messvorrichtung m erfassten Messwerts (etwa einem Trend oder einer Streuung), jedoch sind auch andere Regeln möglich. Mit Hilfe der Messwerterfassung lassen sich auch historische Tabellen erstellen, auf deren Grundlage sich prädiktiv Regelungsentscheidungen treffen lassen, um frühzeitig unerwünschte Betriebszustände vermeiden zu können. Grundsätzlich kann die Regelungsvorrichtung 13 auch externe Messwerte einbeziehen; im Falle einer elektrolytischen Wasserstofferzeugung unter Verwendung von elektrischer Energie, welche aus regenerativer Energie erzeugt wurde, können dies beispielsweise aktuelle Daten von Sonneneinstrahlung oder Wind oder auch entsprechende Vorhersagedaten wie etwa Daten zu Sonnenaufgang und Sonnenuntergang oder Windvorhersagedaten sein, mit Hilfe derer sich für eine Energieerzeugung in Windkraftanlagen oder Photovoltaikanlagen die zu einem späteren Zeitpunkt zur Verfügung stehende Wasserstoffmenge frühzeitig vorhersagen lässt.

Fig. 4 zeigt eine schematische Darstellung einer dritten Ausgestaltung eines Teiles einer erfindungsgemäßen Anlage zur Herstellung von Ammoniak. Die dritte Ausgestaltung unterscheidet sich von der in Fig. 3 dargestellten zweiten Ausgestaltung dahingehend, dass die in Fig. 4 dargestellte Ammoniaksyntheseanlage 1 die zusätzliche Umgehungsleitung 16 zur Überbrückung der Ammoniakentnahmevorrichtung 4 wie in der in Fig. 1 dargestellten konventionellen Anlage zusätzlich eine Abkühlvorrichtung 15 aufweist, mit welcher der bei einem Teillastbetrieb an der Ammoniakentnahmevorrichtung 4 vorbeigeführte Teil des Kreislaufgasstroms zusätzlich abgekühlt werden kann. Zwar besteht einer der Vorteile der vorliegenden Erfindung grade darin, dass auf eine derartige Abkühlvorrichtung 15 in der zusätzlichen Umgehungsleitung 16 gänzlich verzichtet werden kann, da eine exakte Regelung der Temperatur des in die Fördervorrichtung 5 eintretenden Gasstroms bereits mit Hilfe der ersten Umgehungsleitung 6 und der zweiten Umgehungsleitung 10 möglich ist, weshalb die zusätzliche Abkühlvorrichtung 15 nicht erforderlich ist. Allerdings lässt sich die Syntheseanlage 1 mit einer ersten Umgehungsleitung 6 sowie einer zweiten Umgehungsleitung 10 zum Umgehen der Abkühlvorrichtung 9 in der ersten Umgehungsleitung 6 auch dann betreiben, wenn in der zusätzlichen Umgehungsleitung 16 zur Umgehung der Ammoniakentnahmevorrichtung 4 die Abkühlvorrichtung 15 bereits existiert, weshalb es möglich ist, die erfindungsgemäße Lösung in einer bereits bestehenden konventionellen Anlage nachzurüsten und in diese zu integrieren.

### Bezugszeichenliste

- 1: Ammoniaksyntheseanlage
- 2: Wasserstoffvorrichtung
- 3: Konverter
- 4: Ammoniakentnahmevorrichtung
- 5: Fördervorrichtung
- 5a: Saugseite
- 5b: Druckseite
- 6: erste Umgehungsleitung
- 7: Absperrelement
- 8a: erster Teilstrom
- 8b: erster Reststrom
- 9: Abkühlvorrichtung
- 10: zweite Umgehungsleitung
- 11: Absperrelement
- 12a: zweiter Teilstrom
- 12b: zweiter Reststrom
- 13: Regelungsvorrichtung
- 14: Absperrelement
- 15: Abkühlvorrichtung
- 16: zusätzliche Umgehungsleitung
- d: Synthesekreislaufförderrichtung
- m: Messvorrichtung

## Patentansprüche

1. Ammoniaksyntheseanlage (1) mit einer Wasserstoffvorrichtung (2), welche eingerichtet ist, Wasserstoff bereitzustellen, und einem Synthesekreislauf, wobei der Synthesekreislauf aufweist:
- eine Fördervorrichtung (5), die eingerichtet ist zum zyklischen Fördern eines Gasgemisches enthaltend Stickstoff, Wasserstoff und Ammoniak in eine Synthesekreislaufförderrichtung (d), wobei die Fördervorrichtung (5) eine Saugseite (5a) und eine Druckseite (5b) aufweist,
- einen Konverter (3), der eingerichtet ist zum katalytischen Umsetzen von Stickstoff und Wasserstoff zumindest teilweise zu Ammoniak, wobei der Konverter (3) einen Einlass und einen Auslass aufweist, wobei der Einlass des Konverters (3) mit der Druckseite (5b) der Fördervorrichtung (5) strömungstechnisch verbunden ist und der Auslass des Konverters (3) mit der Saugseite (5a) der Fördervorrichtung (5) strömungstechnisch verbunden ist,
- eine erste Umgehungsleitung (6), welche von der Saugseite (5a) der Fördervorrichtung (5) zu der Druckseite (5b) der Fördervorrichtung (5) strömungstechnisch gegenläufig parallel zur Fördervorrichtung (5) angeordnet ist und welche zum absperrbaren Rückführen eines ersten Teilstroms (8a) des Gasgemischs von der Druckseite (5b) der Fördervorrichtung (5) zu der Saugseite (5a) der Fördervorrichtung (5) eingerichtet ist, wobei die erste Umgehungsleitung (6) eine Abkühlvorrichtung (9) aufweist, die zum Kühlen des ersten Teilstroms (8a) des Gasgemischs eingerichtet ist,
**dadurch gekennzeichnet, dass**
die erste Umgehungsleitung (6) weiterhin eine zweite Umgehungsleitung (10) aufweist, welche strömungstechnisch gleichläufig parallel zur Abkühlvorrichtung (9) angeordnet ist und welche zum absperrbaren Hindurchleiten eines zweiten Teilstroms (12a) des ersten Teilstroms (8a) zum Umgehen der Abkühlvorrichtung (9) eingerichtet ist.

2. Ammoniaksyntheseanlage (1) nach Anspruch 1,
wobei die erste Umgehungsleitung (6) so angeordnet ist, dass sie einen Bereich des Synthesekreislaufs, der in Synthesekreislaufförderrichtung (d) stromabwärts der mindestens einen Fördervorrichtung (5) und stromaufwärts des mindestens einen Konverters (3) angeordnet ist, mit einem Bereich des Synthesekreislaufs strömungstechnisch verbindet, der in Synthesekreislaufförderrichtung (d) stromaufwärts der mindestens einen Fördervorrichtung (5) und stromabwärts des mindestens einen Konverters (3) angeordnet ist, und
wobei die erste Umgehungsleitung (6) eingerichtet ist, das Gasgemisch in den ersten Teilstrom (8a) und einen ersten Reststrom (8b) aufzuteilen, wenn die erste Umgehungsleitung (6) nicht vollständig abgesperrt ist, und, während der erste Reststrom (8b) dem Konverter (3) zugeführt wird, den ersten Teilstrom (8a) unter Umgehen des Konverters (3) von der Druckseite (5b) der Fördervorrichtung (5) durch die erste Umgehungsleitung (6) zur Saugseite (5a) der Fördervorrichtung (5) zu leiten,
wobei die zweite Umgehungsleitung (10) so angeordnet ist, dass sie einen Bereich der ersten Umgehungsleitung (6), welcher in Durchströmrichtung stromaufwärts der Abkühlvorrichtung (9) angeordnet ist, mit einem Bereich der ersten Umgehungsleitung (6) strömungstechnisch verbindet, der in Durchströmrichtung stromabwärts der Abkühlvorrichtung (9) angeordnet ist, und
wobei die zweite Umgehungsleitung (10) eingerichtet ist, den ersten Teilstrom (8a) in der ersten Umgehungsleitung (6) in den zweiten Teilstrom (12a) und einen zweiten Reststrom (12b) aufzuteilen, wenn die zweite Umgehungsleitung (10) nicht vollständig abgesperrt ist, und, während der zweite Reststrom (12b) der Abkühlvorrichtung (9) zugeführt wird, den zweiten Teilstrom (12a) unter Umgehen der Abkühlvorrichtung (9) durch die zweite Umgehungsleitung (10) zu leiten.

3. Ammoniaksyntheseanlage (1) nach einem der Ansprüche 1 oder 2, wobei die Wasserstoffvorrichtung (2) eingerichtet ist, Wasserstoff zumindest teilweise durch einen Elektrolyseur bereitzustellen, insbesondere wobei der Elektrolyseur mit aus regenerativen und zumindest teilweise schwankenden Energien gewonnener elektrischen Energie betrieben wird.

4. Ammoniaksyntheseanlage (1) nach einem der Ansprüche 1 bis 3, wobei die Fördervorrichtung (5) ein Zentrifugalkompressor ist und die erste Umgehungsleitung (6) eine geregelt absperrbare und geregelt öffenbare Umblaseleitung einer Pumpgrenzregelungsanordung ist.

5. Ammoniaksyntheseanlage (1) nach einem der Ansprüche 1 bis 4, wobei die erste Umgehungsleitung (6) ein Absperrelement (7) aufweist, das eingerichtet ist zum Beschränken und/oder Versperren des Strömungswegs durch die erste Umgehungsleitung (6).

6. Ammoniaksyntheseanlage (1) nach einem der Ansprüche 1 bis 5, wobei die zweite Umgehungsleitung (10) ein Absperrelement (11) aufweist, das eingerichtet ist zum Beschränken und/oder Versperren des Strömungswegs durch die zweite Umgehungsleitung (10).

7. Ammoniaksyntheseanlage (1) nach einem der Ansprüche 1 bis 6, wobei die Ammoniaksyntheseanlage (1) mindestens eine Messvorrichtung (m) und eine mit der Messvorrichtung (m) verbundene Regelungsvorrichtung (13) aufweist, wobei die Messvorrichtung (m) zum Erfassen mindestens einer Messgröße des Gasgemischs eingerichtet ist, insbesondere der Temperatur, des Drucks und/oder des Volumenstroms des Gasgemischs oder des Gehalts/der Konzentration von Komponenten des Gasgemischs, wobei die Messvorrichtung (m) im Synthesekreislauf angeordnet ist, und wobei die Regelungsvorrichtung (13) eingerichtet ist, auf der Grundlage der von der Messvorrichtung (m) erfassten Messgröße das Absperrelement (7) der ersten Umgehungsleitung (6) und/oder das Absperrelement (11) der zweiten Umgehungsleitung (10) vollständig oder teilweise zu Öffnen oder zu versperren.

8. Verfahren zum Betreiben einer Ammoniaksyntheseanlage, insbesondere einer Ammoniaksyntheseanlage (1) nach einem der Ansprüche 1 bis 7,
wobei ein Gasgemisch aufweisend Stickstoff, Wasserstoff und Ammoniak in einem Synthesekreislauf durch eine Fördervorrichtung (5) mit einer Saugseite (5a) und einer Druckseite (5b) zyklisch gefördert wird,
wobei Stickstoff und Wasserstoff dem Synthesekreislauf zugeführt werden und dort in einem Konverter (3) zumindest teilweise zu Ammoniak umgesetzt werden, wobei das Gasgemisch in Synthesekreislaufförderrichtung (d) stromabwärts von der Fördervorrichtung (5) in einen ersten Teilstrom (8a) und gegebenenfalls einen ersten Reststrom (8b) aufgeteilt wird, von denen der erste Teilstrom (8a) unter Umgehen des Konverters (3) von der Druckseite (5b) der Fördervorrichtung (5) zu der Saugseite (5a) der Fördervorrichtung (5) rückgeführt und dabei in einer Abkühlvorrichtung (9) zumindest teilweise abgekühlt wird und von denen der erste Reststrom (8b), sofern vorhanden, in den Konverter (3) geführt wird,
**dadurch gekennzeichnet, dass**
der erste Teilstrom (8a) in einen zweiten Teilstrom (12a) und gegebenenfalls einen zweiten Reststrom (12b) aufgeteilt wird, von denen von denen der zweite Teilstrom (12a) unter Umgehen der Abkühlvorrichtung (9) der Saugseite (5a) der Fördervorrichtung (5) zugeführt wird und von denen der zweite Reststrom (12b), sofern vorhanden, in die Abkühlvorrichtung (9) geführt, dort abgekühlt wird und von dort der Saugseite (5a) der Fördervorrichtung (5) zugeführt wird.

9. Verfahren nach Anspruch 8, wobei der Wasserstoff zumindest teilweise durch Elektrolyse bereitgestellt wird, insbesondere durch Elektrolyse mit aus regenerativen Energien gewonnener elektrischen Energie.

10. Verfahren nach Anspruch 8 oder 9, wobei das Gasgemisch an der Saugseite (5a) der Fördervorrichtung (5) einen Volumenstrom aufweist, der einen minimalen Wert von 50 % des maximalen Volumenstroms der Fördervorrichtung (5) nicht unterschreitet, bevorzugt einen Volumenstrom von mindestens 85 % und höchstens 105 % des maximalen Volumenstroms der Fördervorrichtung (5) aufweist.

11. Verfahren nach Anspruch 10, wobei das Verhältnis von erstem Teilstrom (8a) zu erstem Reststrom (8b) sowie das Verhältnis von zweiten Teilstrom (12a) zu zweitem Reststrom (12b) derart geregelt wird, dass das Gasgemisch an der Saugseite (5a) der Fördervorrichtung (5) einen Volumenstrom von minimal 85 % des maximalen Volumenstroms der Fördervorrichtung (5) aufweist.

12. Verfahren nach einem der Ansprüche 8 bis 11, wobei die Fördervorrichtung (5) ein Zentrifugalkompressor ist, die Drehzahl des Zentrifugalkompressors auf einen vorgegebenen Wert geregelt wird und das Gasgemisch an der Saugseite (5a) der Fördervorrichtung (5) einen Volumenstrom aufweist, der einen minimalen Wert von 50 % des maximalen Volumenstroms der Fördervorrichtung (5) nicht unterschreitet, bevorzugt einen Volumenstrom von mindestens 70 % und höchstens 105 % des maximalen Volumenstroms der Fördervorrichtung (5) aufweist.

13. Verfahren nach einem der Ansprüche 8 bis 12, wobei unter Anlagenvolllast das Gasgemisch an der Druckseite (5b) der Fördervorrichtung (5) eine Temperatur von mindestens 15 °C und höchstens 60 °C aufweist und/oder unter Anlagenteillast eine Temperatur von mindestens 25 °C und maximal 180 °C aufweist.

14. Verfahren nach Anspruch 13, wobei das Verhältnis von zweitem Teilstrom (12a) zu zweitem Reststrom (12b) derart geregelt wird, dass das Gasgemisch an der Druckseite (5b) der Fördervorrichtung (5) eine Temperatur von mindestens 30 °C und maximal 170 °C aufweist.

## Claims

1. Ammonia synthesis plant (1) with a hydrogen device (2) which is designed to supply hydrogen, and a synthesis circuit, wherein the synthesis circuit comprises:
- a conveying device (5) which is adapted to cyclically convey a gas mixture containing nitrogen, hydrogen and ammonia in a synthesis cycle conveying direction (d), wherein the conveying device (5) comprises a suction side (5a) and a pressure side (5b),
- a converter (3) which is adapted to catalytically convert nitrogen and hydrogen at least partially to ammonia, wherein the converter (3) comprises an inlet and an outlet, wherein the inlet of the converter (3) is fluidically connected to the pressure side (5b) of the conveying device (5) and the outlet of the converter (3) is fluidically connected to the suction side (5a) of the conveying device (5),
- a first bypass line (6), which is arranged parallel to the conveying device (5) from the suction side (5a) of the conveying device (5) to the pressure side (5b) of the conveying device (5) in a counterflow arrangement and which is adapted for shut-offably returning a first partial flow (8a) of the gas mixture from the pressure side (5b) of the conveying device (5) to the suction side (5a) of the conveying device (5), wherein the first bypass line (6) comprises a cooling device (9) which is adapted for cooling the first partial flow (8a) of the gas mixture,
**characterised in that**
the first bypass line (6) further comprises a second bypass line (10) which is arranged in parallel to the cooling device (9) in a cocurrent flow arrangement and which is adapted for shut-offably passing a second partial flow (12a) of the first partial flow (8a) in order to bypass the cooling device (9).

2. Ammonia synthesis plant (1) according to claim 1,
wherein the first bypass line (6) is arranged such that it fluidically connects a region of the synthesis circuit which is arranged in the synthesis circuit conveying direction (d) downstream of the at least one conveying device (5) and upstream of the at least one converter (3), with a region of the synthesis circuit which is arranged in the synthesis circuit conveying direction (d) upstream of the at least one conveying device (5) and downstream of the at least one converter (3), and
wherein the first bypass line (6) is adapted to divide the gas mixture into the first partial flow (8a) and a first residual flow (8b) when the first bypass line (6) is not completely shut off, and, while the first residual flow (8b) is supplied to the converter (3), to direct the first partial flow (8a) from the pressure side (5b) of the conveying device (5) through the first bypass line (6) to the suction side (5a) of the conveying device (5) by bypassing the converter (3),
wherein the second bypass line (10) is arranged such that it fluidically connects a region of the first bypass line (6), which is arranged upstream of the cooling device (9) in the flow direction, to a region of the first bypass line (6), which is arranged downstream of the cooling device (9) in the flow direction, and
wherein the second bypass line (10) is adapted to divide the first partial flow (8a) in the first bypass line (6) into the second partial flow (12a) and a second residual flow (12b) when the second bypass line (10) is not completely shut off, and, while the second residual flow (12b) is supplied to the cooling device (9), to direct the second partial flow (12a) through the second bypass line (10) by bypassing the cooling device (9).

3. Ammonia synthesis plant (1) according to one of claims 1 or 2, wherein the hydrogen device (2) is adapted to supply hydrogen at least partially by means of an electrolyser, in particular wherein the electrolyser is operated with electrical energy obtained from renewable and at least partially fluctuating energy.

4. Ammonia synthesis plant (1) according to one of claims 1 to 3, wherein the conveying device (5) is a centrifugal compressor and the first bypass line (6) is a controllably shut-offable and controllably openable bypass line of a anti-surge control arrangement.

5. Ammonia synthesis plant (1) according to one of claims 1 to 4, wherein the first bypass line (6) comprises a shut-off element (7) which is adapted to restrict and/or block the flow path through the first bypass line (6).

6. Ammonia synthesis plant (1) according to one of claims 1 to 5, wherein the second bypass line (10) comprises a shut-off element (11) which is adapted to restrict and/or block the flow path through the second bypass line (10).

7. Ammonia synthesis plant (1) according to one of claims 1 to 6, wherein the ammonia synthesis plant (1) comprises at least one measuring device (m) and a control device (13) connected to the measuring device (m), wherein the measuring device (m) is adapted to determine at least one quantity to be measured of the gas mixture, in particular the temperature, the pressure and/or the volume flow rate of the gas mixture or the content/concentration of components of the gas mixture, wherein the measuring device (m) is arranged in the synthesis circuit, and wherein the control device (13) is adapted to completely or partially open or close the shut-off element (7) of the first bypass line (6) and/or the shut-off element (11) of the second bypass line (10 on the basis of the quantity to be measured determined by the measuring device (m).

8. Method for operating an ammonia synthesis plant, in particular an ammonia synthesis plant (1) according to one of claims 1 to 7,
wherein a gas mixture comprising nitrogen, hydrogen and ammonia is cyclically conveyed in a synthesis circuit by a conveying device (5) with a suction side (5a) and a pressure side (5b),
wherein nitrogen and hydrogen are fed into the synthesis circuit and are converted there in a converter (3) at least partially to ammonia,
wherein in the synthesis cycle conveying direction (d) downstream of the conveying device (5), the gas mixture is divided into a first partial flow (8a) and, if necessary, a first residual flow (8b), of which the first partial flow (8a) is returned from the pressure side (5b) of the conveying device (5) to the suction side (5a) of the conveying device (5) by bypassing the converter (3), while being at least partially cooled in a cooling device (9), and of which the first residual stream (8b), if present, is fed into the converter (3), **characterised in that**
the first partial flow (8a) is divided into a second partial flow (12a) and, if necessary, a second residual flow (12b), of which of which the second partial flow (12a) is fed to the suction side (5a) of the conveying device (5) by bypassing the cooling device (9) and of which the second residual flow (12b), if present, is fed into the cooling device (9), cooled therein and fed from there to the suction side (5a) of the conveying device (5).

9. Method according to claim 8, wherein the hydrogen is provided at least partially by electrolysis, in particular by electrolysis using electrical energy obtained from renewable energies.

10. Method according to claim 8 or 9, wherein the gas mixture on the suction side (5a) of the conveying device (5) has a volume flow rate that does not fall below a minimum value of 50% of the maximum volume flow rate of the conveying device (5), preferably a volume flow rate of at least 85% and at most 105% of the maximum volume flow rate of the conveying device (5).

11. Method according to claim 10, wherein the ratio of the first partial flow (8a) to the first residual flow (8b) and the ratio of the second partial flow (12a) to the second residual flow (12b) is regulated in such a way that the gas mixture on the suction side (5a) of the conveying device (5) has a volume flow rate of at least 85% of the maximum volume flow rate of the conveying device (5).

12. Method according to one of claims 8 to 11, wherein the conveying device (5) is a centrifugal compressor, the rotational speed of the centrifugal compressor is controlled to a predetermined value, and the gas mixture on the suction side (5a) of the conveying device (5) has a volume flow rate that does not fall below a minimum value of 50% of the maximum volume flow rate of the conveying device (5), preferably having a volume flow rate of at least 70% and at most 105% of the maximum volume flow rate of the conveying device (5).

13. Method according to one of claims 8 to 12, wherein, under full load of the plant, the gas mixture on the pressure side (5b) of the conveying device (5) has a temperature of at least 15 °C and at most 60 °C and/or, under partial load of the plant, has a temperature of at least 25 °C and at most 180 °C.

14. Method according to claim 13, wherein the ratio of the second partial flow (12a) to the second residual flow (12b) is regulated such that the gas mixture on the pressure side (5b) of the conveying device (5) has a temperature of at least 30 °C and at most 170 °C.

## Revendications

1. Installation de synthèse d'ammoniac (1) avec un dispositif à hydrogène (2) qui est adapté pour fournir de l'hydrogène, et un circuit de synthèse, dans laquelle le circuit de synthèse comprend :
- un dispositif de transport (5) qui est adapté pour transporter de manière cyclique un mélange gazeux contenant de l'azote, de l'hydrogène et de l'ammoniac dans une direction de transport de cycle de synthèse (d), dans lequel le dispositif de transport (5) comprend un côté aspiration (5a) et un côté pression (5b),
- un convertisseur (3) qui est adapté pour convertir catalytiquement l'azote et l'hydrogène au moins partiellement en ammoniac, dans lequel le convertisseur (3) comprend une entrée et une sortie, dans lequel l'entrée du convertisseur (3) est reliée de manière fluidique au côté pression (5b) du dispositif de transport (5) et la sortie du convertisseur (3) est reliée de manière fluidique au côté aspiration (5a) du dispositif de transport (5),
- une première conduite de dérivation (6), qui est disposée du côté aspiration (5a) du dispositif de transport (5) vers le côté pression (5b) du dispositif de transport (5) en parallèle au dispositif de transport (5) dans une disposition à contre-courant et qui est adaptée pour renvoyer de manière isolable un premier flux partiel (8a) du mélange gazeux du côté pression (5b) du dispositif de transport (5) vers le côté aspiration (5a) du dispositif de transport (5), la première conduite de dérivation (6) comprenant un dispositif de refroidissement (9) qui est adapté pour refroidir le premier flux partiel (8a) du mélange gazeux,
**caractérisé en ce que**
la première conduite de dérivation (6) comprend en outre une deuxième conduite de dérivation (10) qui est disposée en parallèle au dispositif de refroidissement (9) dans une disposition à co-courant et qui est adaptée pour laisser passer de manière isolable un deuxième flux partiel (12a) du premier flux partiel (8a) afin de contourner le dispositif de refroidissement (9).

2. Installation de synthèse d'ammoniac (1) selon la revendication 1,
dans laquelle la première conduite de dérivation (6) est disposée de manière à relier fluidiquement une zone du circuit de synthèse, qui est disposée dans la direction de transport (d) du circuit de synthèse en aval du au moins un dispositif de transport (5) et en amont du au moins un convertisseur (3), avec une zone du circuit de synthèse qui est disposée dans le sens de transport (d) du circuit de synthèse en amont du au moins un dispositif de transport (5) et en aval du au moins un convertisseur (3), et
dans lequel la première conduite de dérivation (6) est adaptée pour diviser le mélange gazeux en un premier flux partiel (8a) et un premier flux résiduel (8b) lorsque la première conduite de dérivation (6) n'est pas complètement fermée, et, tandis que le premier flux résiduel (8b) est fourni au convertisseur (3), pour diriger le premier flux partiel (8a) depuis le côté pression (5b) du dispositif de transport (5) à travers la première conduite de dérivation (6) vers le côté aspiration (5a) du dispositif de transport (5) en contournant le convertisseur (3),
dans lequel la deuxième conduite de dérivation (10) est disposée de manière à relier de manière fluidique une région de la première conduite de dérivation (6), qui est disposée en amont du dispositif de refroidissement (9) dans le sens d'écoulement, à une région de la première conduite de dérivation (6), qui est disposée en aval du dispositif de refroidissement (9) dans le sens d'écoulement, et
dans laquelle la deuxième conduite de dérivation (10) est adaptée pour diviser le premier flux partiel (8a) dans la première conduite de dérivation (6) en un deuxième flux partiel (12a) et un deuxième flux résiduel (12b) lorsque la deuxième conduite de dérivation (10) n'est pas complètement fermée, et, tandis que le deuxième flux résiduel (12b) est fourni au dispositif de refroidissement (9), pour diriger le deuxième flux partiel (12a) à travers la deuxième conduite de dérivation (10) en contournant le dispositif de refroidissement (9).

3. Installation de synthèse d'ammoniac (1) selon l'une des revendications 1 ou 2, dans laquelle le dispositif à hydrogène (2) est adapté pour fournir de l'hydrogène au moins en partie au moyen d'un électrolyseur, en particulier dans laquelle l'électrolyseur fonctionne avec de l'énergie électrique obtenue à partir d'une énergie renouvelable et au moins en partie fluctuante.

4. Installation de synthèse d'ammoniac (1) selon l'une des revendications 1 à 3, dans laquelle le dispositif de transport (5) est un compresseur centrifuge et la première conduite de dérivation (6) est une conduite de dérivation pouvant être fermée et ouverte de manière contrôlable d'un dispositif de contrôle anti-surges.

5. Installation de synthèse d'ammoniac (1) selon l'une des revendications 1 à 4, dans laquelle la première conduite de dérivation (6) comprend un élément d'arrêt (7) qui est adapté pour restreindre et/ou bloquer le passage à travers la première conduite de dérivation (6).

6. Installation de synthèse d'ammoniac (1) selon l'une des revendications 1 à 5, dans laquelle la deuxième conduite de dérivation (10) comprend un élément d'arrêt (11) qui est adapté pour restreindre et/ou bloquer le passage à travers la deuxième conduite de dérivation (10).

7. Installation de synthèse d'ammoniac (1) selon l'une des revendications 1 à 6, dans laquelle l'installation de synthèse d'ammoniac (1) comprend au moins un dispositif de mesure (m) et un dispositif de commande (13) relié au dispositif de mesure (m), dans laquelle le dispositif de mesure (m) est adapté pour déterminer au moins une grandeur à mesurer du mélange gazeux, en particulier la température, la pression et/ou le débit volumique du mélange gazeux ou la teneur/concentration des composants du mélange gazeux, dans laquelle le dispositif de mesure (m) est disposé dans le circuit de synthèse, et dans laquelle le dispositif de commande (13) est adapté pour ouvrir ou fermer complètement ou partiellement l'élément d'arrêt (7) de la première conduite de dérivation (6) et/ou l'élément d'arrêt (11) de la deuxième conduite de dérivation (10 sur la base de la quantité à mesurer déterminée par le dispositif de mesure (m).

8. Procédé pour faire fonctionner une installation de synthèse d'ammoniac, en particulier une installation de synthèse d'ammoniac (1) selon l'une des revendications 1 à 7,
dans lequel un mélange gazeux comprenant de l'azote, de l'hydrogène et de l'ammoniac est transporté de manière cyclique dans un circuit de synthèse par un dispositif de transport (5) comportant un côté aspiration (5a) et un côté pression (5b),
dans lequel l'azote et l'hydrogène sont introduits dans le circuit de synthèse et y sont convertis au moins partiellement en ammoniac dans un convertisseur (3),
dans lequel, dans le sens de transport (d) du cycle de synthèse en aval du dispositif de transport (5), le mélange gazeux est divisé en un premier flux partiel (8a) et, si nécessaire, un premier flux résiduel (8b), dont le premier flux partiel (8a) est renvoyé du côté pression (5b) du dispositif de transport (5) vers le côté aspiration (5a) du dispositif de transport (5) en contournant le convertisseur (3), tout en étant au moins partiellement refroidi dans un dispositif de refroidissement (9), et dont le premier flux résiduel (8b), s'il est présent, est introduit dans le convertisseur (3),
**caractérisé en ce que**
le premier flux partiel (8a) est divisé en un deuxième flux partiel (12a) et, si nécessaire, un deuxième flux résiduel (12b), dont le deuxième flux partiel (12a) est acheminé vers le côté aspiration (5a) du dispositif de transport (5) en contournant le dispositif de refroidissement (9) et dont le deuxième flux résiduel (12b), s'il est présent, est acheminé dans le dispositif de refroidissement (9), refroidi dans celui-ci et acheminé de là vers le côté aspiration (5a) du dispositif de transport (5).

9. Procédé selon la revendication 8, dans lequel l'hydrogène est fourni au moins en partie par électrolyse, en particulier par électrolyse utilisant de l'énergie électrique obtenue à partir d'énergies renouvelables.

10. Procédé selon la revendication 8 ou 9, dans lequel le mélange gazeux du côté aspiration (5a) du dispositif de transport (5) présente un débit volumique qui ne descend pas en dessous d'une valeur minimale de 50 % du débit volumique maximal du dispositif de transport (5), de préférence un débit volumique d'au moins 85 % et d'au plus 105 % du débit volumique maximal du dispositif de transport (5).

11. Procédé selon la revendication 10, dans lequel le rapport entre le premier débit partiel (8a) et le premier débit résiduel (8b) et le rapport entre le deuxième débit partiel (12a) et le deuxième débit résiduel (12b) sont régulés de telle sorte que le mélange gazeux du côté aspiration (5a) du dispositif de transport (5) présente un débit volumique d'au moins 85 % du débit volumique maximal du dispositif de transport (5).

12. Procédé selon l'une des revendications 8 à 11, dans lequel le dispositif de transport (5) est un compresseur centrifuge, la vitesse de rotation du compresseur centrifuge est régulée à une valeur prédéterminée, et le mélange gazeux du côté aspiration (5a) du dispositif de transport (5) a un débit volumique qui ne descend pas en dessous d'une valeur minimale de 50 % du débit volumique maximal du dispositif de transport (5), ayant de préférence un débit volumique d'au moins 70 % et d'au plus 105 % du débit volumique maximal du dispositif de transport (5).

13. Procédé selon l'une des revendications 8 à 12, dans lequel, à pleine charge de l'installation, le mélange gazeux du côté pression (5b) du dispositif de transport (5) a une température d'au moins 15 °C et d'au plus 60 °C et/ou, à charge partielle de l'installation, a une température d'au moins 25 °C et d'au plus 180 °C.

14. Procédé selon la revendication 13, dans lequel le rapport entre le deuxième débit partiel (12a) et le deuxième débit résiduel (12b) est régulé de telle sorte que le mélange gazeux du côté pression (5b) du dispositif de transport (5) ait une température d'au moins 30 °C et d'au plus 170 °C.
